(19) Europäisches Patentamt
European Patent Office
Office européen des brevets

(11) **EP 4 632 114 A1**

(12) **EUROPEAN PATENT APPLICATION**
published in accordance with Art. 153(4) EPC

(43) Date of publication:
**15.10.2025 Bulletin 2025/42**

(21) Application number: 23900946.7

(22) Date of filing: **20.11.2023**

(51) International Patent Classification (IPC):
*C25D 1/04* (2006.01)    *C25D 3/38* (2006.01)
*C25D 17/12* (2006.01)    *C23C 28/00* (2006.01)
*C23F 11/18* (2006.01)    *H01M 4/66* (2006.01)
*H01M 10/052* (2010.01)

(52) Cooperative Patent Classification (CPC):
**C23C 28/00; C23F 11/18; C25D 1/04; C25D 3/38;
C25D 17/12; H01M 4/66; H01M 10/052;** Y02E 60/10

(86) International application number:
**PCT/KR2023/018614**

(87) International publication number:
**WO 2024/122927 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 KR 20220168761
06.12.2022 KR 20220168762
13.12.2022 KR 20220173774
22.12.2022 KR 20220181692
05.10.2023 KR 20230132906
05.10.2023 KR 20230132907
05.10.2023 KR 20230132908
05.10.2023 KR 20230132911**

(71) Applicant: **SK Nexilis Co., Ltd.
Jeollabuk-do 56137 (KR)**

(72) Inventors:
• **JIN, Shan Hua
Jeongeup-si Jeollabuk-do 56137 (KR)**
• **YOON, Min Seok
Jeongeup-si Jeollabuk-do 56137 (KR)**

(74) Representative: **Ter Meer Steinmeister & Partner
Patentanwälte mbB
Nymphenburger Straße 4
80335 München (DE)**

(54) **HIGH-STRENGTH AND HIGH-ELONGATION COPPER FOIL, ELECTRODE COMPRISING SAME, SECONDARY BATTERY COMPRISING SAME, AND MANUFACTURING METHOD THEREFOR**

(57) An embodiment of the present invention provides a copper foil that comprises: a copper film including 99.9 wt% or more of copper; and a protective layer on the copper film, and has a room-temperature puncture strength in the range of 5.0 N-7.0 N, and a high-temperature puncture strength in the range of 8.0 N-12.5 N. Here, the high-temperature puncture strength is a puncture strength measured after heat treatment at 190 °C for 1 hour. An embodiment of the present invention provides a copper foil that comprises: a copper film including 99.9 wt% or more of copper, and a protective layer on the copper film, and has a room-temperature water contact angle in the range of 60-70°, and a room-temperature surface resistivity in the range of 2.4-2.7 mΩ/cm. An embodiment of the present invention provides a copper foil that comprises a copper film including 99.9 wt% or more of copper and has a color difference coefficient in the range of 0.38-0.7 based on the Lab colorimetric system. An embodiment of the present invention provides a copper foil that comprises a copper film including 99.9 wt% or more of copper and has a room-temperature MIT 1 of 280 or more, a high-temperature MIT 1 of 130 or more, a room-temperature MIT 2 of 14 or more, and a high-temperature MIT 2 of 25 or more.

# FIG. 1

110

112

111

## Description

### [Technical field]

The present disclosure relates to a copper foil, an electrode including the same, a secondary battery including the same, and a method for manufacturing the same.

### [Background Art1

Secondary batteries are types of energy conversion devices that convert electrical energy into chemical energy, store the chemical energy therein, and then convert the chemical energy back to electrical energy when electricity is needed, thereby generating electricity. The secondary batteries are used as energy sources for electric vehicles as well as portable home appliances such as mobile phones, laptop computers, and the like. The secondary batteries are rechargeable and thus are also referred to as rechargeable batteries.

As secondary batteries that have economic and environmental advantages over disposable primary batteries, there are lead-acid batteries, nickel-cadmium secondary batteries, nickel-hydrogen secondary batteries, and lithium secondary batteries.

In particular, lithium secondary batteries may store a relatively large amount of energy relative to their size and weight compared with other secondary batteries. Accordingly, in the field of information communication devices in which portability and mobility are important, the lithium secondary batteries are preferred, and an application range thereof is also expanding to energy storage devices for hybrid vehicles and electric vehicles.

Lithium secondary batteries are repeatedly used through one cycle of charging and discharging. When a certain device is operated with a fully charged lithium secondary battery, the lithium secondary battery should have a high charge/discharge capacity in order to increase the operating time of the device. Accordingly, research to satisfy ever-increasing expectations (needs) of consumers regarding the charge/discharge capacity of a lithium secondary battery is continuously required.

Such a secondary battery includes an anode current collector made of a copper foil, and among copper foils, an electrolytic copper foil is widely used as an anode current collector of a secondary battery. Along with an increase in demand for secondary batteries, there is an increase in demand for secondary batteries with high capacity, high efficiency, and high quality, and thus, there is a need for copper foils capable of improving characteristics of secondary batteries. In particular, there is a need for copper foils that can ensure high capacity to secondary batteries and enable secondary batteries to stably maintain capacity and performance.

Battery characteristics of the lithium secondary battery are greatly changed according to a surface state of a copper foil used as a current collector, and thus, in order to improve yield, it is very important to improve surface characteristics of the copper foil.

In particular, when a surface roughness of the copper foil is unnecessarily high or additives are not properly added during an electroplating process, the active material is not uniformly coated, and thus, the active material is not uniformly coated due to unevenness of a surface shape of the copper foil. When the active material is non-uniformly coated on the surface of the copper foil, a short circuit may occur during charging or discharging, or a phenomenon in which the active material is delaminated from the copper foil occurs, resulting in a decrease in yield.

Copper foils are used to manufacture various products such as flexible printed circuit boards (FPCBs) for a secondary battery.

In particular, a copper foil formed by electroplating is referred to as an electrolytic copper foil. The electrolytic copper foil is manufactured through a roll-to-roll (RTR) process, and the electrolytic copper foil is used to manufacture anodes for a secondary battery, FPCBs, and the like through an RTR process.

As electronic devices continue to decrease in size, the angle at which a copper foil is folded in the device becomes sharper. Accordingly, there is a need for a copper foil with high flexibility that does not damage a circuit even when folded at a sharp angle and/or kept in a folded state for a long time.

### [Disclosure]

### [Technical Problem]

Accordingly, the present disclosure relates to a copper foil capable of preventing the problems caused by the limitations and disadvantages of the related art described above, an electrode including the same, a secondary battery including the same, and a method for manufacturing the same.

According to one embodiment of the present disclosure, there is provided a copper foil with improved charge and discharge efficiency by having a room temperature puncture strength in a range of 5.0 N to 7.0 N.

According to another embodiment of the present disclosure, there is provided a copper foil with improved charge and discharge efficiency by having a high-temperature puncture strength in a range of 8.0 N to 12.5 N.

According to one embodiment of the present disclosure, there is provided a copper foil with improved conductivity by having a room temperature water contact angle in a range of 60° to 70°.

According to another embodiment of the present disclosure, there is provided a copper foil with improved conductivity by having a room temperature surface resistivity in a range of 2.4 mΩ/cm to 2.7 mΩ/cm.

According to still another embodiment of the present disclosure, there is provided a copper foil that maintains high conductivity even after heat treatment by having a water contact angle reduction rate in a range of 0% to 25% after heat treatment at 190 °C for one hour.

According to yet another embodiment of the present disclosure, there is provided a copper foil that maintains high conductivity even after heat treatment by having a surface resistance increase rate in a range of 0% to 5% after heat treatment at 190 °C for one hour.

According to yet another embodiment of the present disclosure, there is provided an electrode capable of ensuring high productivity by being manufactured with a copper foil having improved conductivity during a roll-to-roll (RTR) process.

According to yet another embodiment of the present disclosure, there is provided a secondary battery capable of ensuring high productivity by being manufactured with a copper foil having improved conductivity during an RTR process.

According to yet another embodiment of the present disclosure, there is provided a method for manufacturing a copper foil with improved conductivity during an RTR process by having a room temperature water contact angle in a range of 60° to 70° and a room temperature surface resistivity in a range of 2.4 mΩ/cm to 2.7 mΩ/cm.

According to one embodiment of the present disclosure, there is provided a copper foil having a surface structure that enables uniform coating of an active material before and after stretching by having a color difference coefficient in a range of 0.38 to 0.7 based on the Lab color system.

According to another embodiment of the present disclosure, there is provided a copper foil in which factors such as surface roughness and elongation are optimized so that properties suitable for use as a current collector are imparted thereto.

According to one embodiment of the present disclosure, there is provided a copper foil having improved flexibility resistance by having a room temperature MIT 1 of 280 or more.

According to another embodiment of the present disclosure, there is provided a copper foil having improved flexibility resistance even at a high temperature by having a high-temperature MIT 1 of 130 or more.

According to still another embodiment of the present disclosure, there is provided a copper foil having improved flexibility resistance by having a room temperature MIT 2 of 14 or more.

According to yet another embodiment of the present disclosure, there is provided a copper foil having improved flexibility resistance even at a high temperature by having a high-temperature MIT 2 of 25 or more.

According to still another embodiment of the present disclosure, there is provided an electrode for a secondary battery including the copper foil, and a secondary battery including the electrode for a secondary battery.

According to yet another embodiment of the present disclosure, there is provided a method for manufacturing a copper foil with improved charge and discharge efficiency.

In addition to the aspects of the present disclosure described above, other features and advantages of the present disclosure will be described in the following detailed description, or may be clearly understood by those skilled in the art to which the present disclosure pertains from such description.

### [Technical Solution]

According to one embodiment of the present disclosure, there is provided a copper foil including a copper film including 99.9 wt% or more of copper, and a protective layer formed on the copper film, wherein the copper foil has a room temperature puncture strength in a range of 5.0 N to 7.0 N, and a high-temperature puncture strength in a range of 8.0 N to 12.5 N. At this time, the high-temperature puncture strength is a puncture strength measured after heat treatment at 190 °C for one hour.

According to one embodiment of the present disclosure, there is provided a copper foil including a copper film including 99.9 wt% or more of copper, and a protective layer formed on the copper film, wherein the copper foil has a room temperature water contact angle in a range of 60° to 70°, and a room temperature surface resistivity in a range of 2.4 mΩ/cm to 2.7 mΩ/cm.

According to one embodiment of the present disclosure, there is provided a copper foil including a copper film having 99.9 wt% or more of copper, wherein the copper foil has a color difference coefficient in a range of 0.38 to 0.7 based on the Lab color system. The color difference coefficient is calculated by Equation 1 below, [Equation 1] color difference coefficient=|color difference (E") after stretching-color difference (E') before stretching| wherein the color difference (E') before stretching of Equation 1 is calculated by Equation 2 below, [Equation 2] color difference (E') before stretching=

$[(L^*_1)^2+(a^*_1)^2+(b^*_1)^2]^{1/2}$ wherein $L^*_1$ in Equation 2 refers to L* before stretching, $a^*_1$ in Equation 2 refers to a* before stretching, and $b^*_1$ in Equation 2 refers to b* before stretching, and the color difference (E") after stretching of Equation 1 is calculated by Equation 3 below, [Equation 3] color difference (E") after stretching= $[(L^*_2)^2+(a^*_2)^2+(b^*_2)^2]^{1/2}$ wherein $L^*_2$ in Equation 3 refers to L* after stretching, $a^*_2$ in Equation 3 refers to a* after stretching, and $b^*_2$ in Equation 3 refers to b* after stretching.

According to one embodiment of the present disclosure, there is provided a copper foil including a copper film including 99.9 wt% or more of copper, wherein the copper foil has a room temperature MIT 1 of 280 or more, a high-temperature MIT 1 of 130 or more, a room temperature MIT 2 of 14 or more, and a high-temperature MIT 2 of 25 or more. The room temperature MIT 1 refers to an MIT number when a bending radius (R) is 0.38 mm at room temperature, the high-temperature MIT 1 refers to an MIT number when a bending radius (R) is 0.38 mm after heat treatment at 190 °C for one hour, the room temperature MIT 2 refers to an MIT number when a bending radius (R) is 0.1 mm at room temperature, and the high-temperature MIT 2 refers to an MIT number when a bending radius (R) is 0.1 mm after heat treatment at 190 °C for one hour.

According to another embodiment of the present disclosure, there is provided a method for manufacturing a copper foil, the method including preparing an electrolyte containing copper ions, forming a copper film, and forming a protective layer on the copper film, wherein the forming of the copper film includes forming the copper film on a rotating anode drum by electrically connecting a cathode plate and the rotating anode drum, which are disposed to be spaced apart from each other in the electrolyte in an electrolytic bath, and the electrolyte includes copper ions at a concentration of 70 g/L to 100 g/L, sulfuric acid at a concentration of 70 g/L to 150 g/L, chlorine (Cl) at a concentration of 1 ppm to 3 ppm, hydrogen peroxide at a concentration of 1 ml/L to 10 ml/L, silver ions ($Ag^+$) at a concentration of 0.1 ppm to 1.0 ppm, cerium ions ($Ce^{2+}$) at a concentration of 2 ppm to 10 ppm, and lead ions ($Pb^{2+}$) at a concentration of 1 ppm to 20 ppm.

According to still another embodiment of the present disclosure, there is provided an electrode for a secondary battery, the electrode including a copper foil and an active material layer disposed on at least one surface of the copper foil.

According to yet another embodiment of the present disclosure, there is provided a secondary battery including a cathode configured to provide lithium ions during charging, and an anode configured to provide electrons and lithium ions during discharging, an electrolyte disposed between the cathode and the anode to provide an environment in which the lithium ions can move, and a separator configured to electrically insulate the anode and the cathode.

## [Advantageous Effects]

According to one embodiment of the present disclosure, a copper foil can be provided that continuously maintains its quality reliability without a breakage even when subjected to high-temperature processes performed in the manufacture of a secondary battery or when the secondary battery is operated under abnormally high-temperature conditions, by controlling a room temperature puncture strength and a puncture strength after heat treatment, an electrode for a secondary battery which can exhibits excellent cycle lifespan characteristics and stability, and a secondary battery including the electrode.

According to the present disclosure, a copper foil with improved conductivity can be manufactured, and intermediate parts and final products, such as flexible printed circuit boards (FPCBs) and secondary batteries, can be manufactured using the copper foil, so that productivity of the intermediate parts as well as the final products can be improved.

According to one embodiment of the present disclosure, it is possible to provide a copper foil having a surface structure that enables uniform coating of an active material before and after stretching by having a color difference coefficient in a range of 0.38 to 0.7 based on the Lab color system, an electrode for a secondary battery capable of exhibiting excellent stability by including the same, and a secondary battery including the electrode.

According to one embodiment of the present disclosure, a copper foil can be provided that continuously maintains its quality reliability without a breakage even when subjected to high-temperature processes performed during the manufacture of a secondary battery or the secondary battery is operated under abnormally high-temperature conditions, by improving a room temperature MIT 1, a high-temperature MIT 1, a room temperature MIT 2, and a high-temperature MIT 2, an electrode for a secondary battery which can exhibits excellent cycle lifespan characteristics and stability, and a secondary battery including the electrode.

## [Description of Drawings]

FIG. 1 is a cross-sectional view of a copper foil according to one embodiment of the present disclosure;
FIG. 2 is a cross-sectional view of a copper foil according to another embodiment of the present disclosure;
FIG. 3 is a cross-sectional view of an electrode for a secondary battery according to still another embodiment of the present disclosure;

FIG. 4 is a cross-sectional view of an electrode for a secondary battery according to yet another embodiment of the present disclosure;

FIG. 5 is a schematic cross-sectional view of a secondary battery according to yet another embodiment of the present disclosure; and

FIG. 6 is a device for manufacturing a copper foil according to yet another embodiment of the present disclosure.

**[Best Mode]**

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is not used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Therefore, a first component described below may be a second component within the technical spirit of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

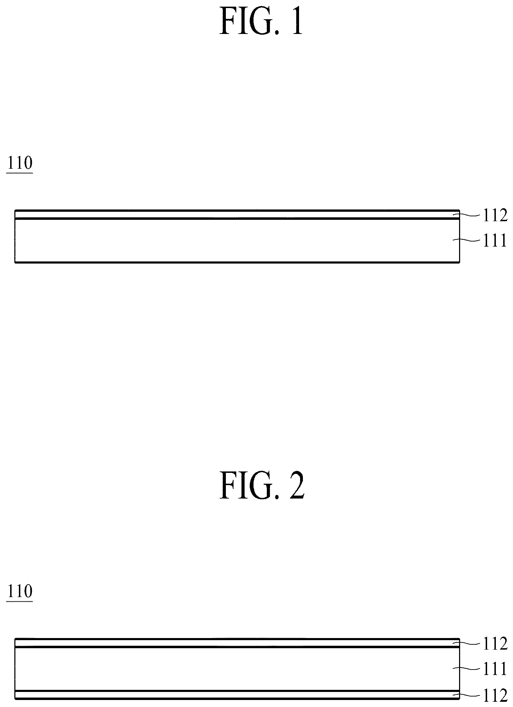

FIG. 1 is a cross-sectional view of a copper foil 110 according to one embodiment of the present disclosure.

Referring to FIG. 1, the copper foil 110 of the present disclosure includes a copper film 111 including 99.9 wt% or more of copper and a protective layer 112 formed on the copper film 111. In the copper foil 110 illustrated in FIG. 1, the protective layer 112 is formed on one surface of the copper film 111, but the embodiments of the present disclosure are not limited thereto. Referring to FIG. 2, the protective layer 112 may be formed on each of both surfaces of the copper film 111.

The copper film 111 may be formed on a rotating anode drum through electroplating, and may have a shiny surface that is in direct contact with the rotating anode drum in an electroplating process and a matte surface opposite to the shiny surface.

The protective layer 112 is formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance thereof, thereby increasing a lifespan of a final product including the copper foil 110 as well as a lifespan of the copper foil 110 itself.

According to one embodiment of the present disclosure, the copper foil 110 has a room temperature puncture strength in a range of 5.0 N to 7.0 N. The room temperature puncture strength refers to a puncture strength measured at room temperature.

When the room temperature puncture strength of the copper foil 110 is less than 5.0 N, there is a risk that the copper foil 110 has a low elongation, which may cause the copper foil 110 to break during a manufacturing process of final products such as an anode current collector of a secondary battery, a flexible printed circuit board (FPCB), and the like. Thus, workability of the copper foil 110 may be degraded, and a defect rate of a secondary battery may be increased.

On the other hand, when the room temperature puncture strength of the copper foil 110 exceeds 7.0 N, the elongation of the copper foil 110 becomes very large, and thus, wrinkles may occur due to a force applied during a manufacturing process of the copper foil 110. Thus, the workability of the copper foil 110 may be degraded, and a defect rate of the secondary battery may be increased.

According to one embodiment of the present disclosure, the copper foil 110 has a high-temperature puncture strength in a range of 8.0 N to 12.5 N. The high-temperature puncture strength refers to a puncture strength measured after heat treatment at 190 °C for one hour.

When the high-temperature puncture strength of the copper foil 110 is less than 8.0 N, due to the nature of the manufacturing process of the copper foil 110, which is conducted at high temperatures, the copper foil 110 has a low elongation at high temperatures, and thus breakage may occur and quality reliability of the copper foil 110 may not be continuously maintained. As a result, an electrode for a secondary battery and a secondary battery may be degraded in cycle lifespan characteristics and stability.

On the other hand, when the high-temperature puncture strength of the copper foil 110 exceeds 12.5 N, the copper foil 110 has a high elongation, and due to the nature of the manufacturing process of the copper foil 110, which is conducted at high temperatures, softening may occur during a roll pressing process and/or a drying process, and deterioration of handleability due to wrinkles may occur. As a result, the workability of the copper foil 110 may be degraded and the defect rate of the secondary battery may be increased.

According to one embodiment of the present disclosure, the copper foil 110 has a puncture strength ratio of 120% or more. In this case, the puncture strength ratio refers to a ratio of the high-temperature puncture strength to the room temperature puncture strength. Specifically, the puncture strength ratio refers to (high-temperature puncture strength/room temperature puncture strength)×100.

The copper foil 110 according to one embodiment of the present disclosure has a puncture strength value greater than or equal to a certain value after heat treatment, and thus exhibits puncture resistance. As such, a copper foil 110 having a high puncture strength value after heat treatment does not break under abnormally high-temperature conditions when applied to a secondary battery, and thus the cycle lifespan characteristics and stability of the secondary battery can be continuously maintained to ensure the reliability of the product.

On the other hand, when the puncture strength ratio of the copper foil 110 is less than 120%, the copper foil 110 may not have high puncture resistance after heat treatment. Thus, when the copper foil 110 that does not have a high puncture strength value after heat treatment is applied to a secondary battery, breakage may occur under high-temperature conditions, and the cycle lifespan characteristics and reliability of the secondary battery may be degraded.

According to one embodiment of the present disclosure, the copper foil 110 has a room temperature puncture strength index of 0.650 N/$\mu$m to 0.875 N/$\mu$m. In this case, the room temperature puncture strength index is calculated by Equation 1 below.

Room temperature puncture strength index = room temperature puncture strength/thickness of copper foil     [Equation 1]

When the room temperature puncture strength index is less than 0.650 N/$\mu$m, the copper foil 110 has a low elongation, which may cause the copper foil 110 to break during the manufacturing process of final products such as an anode current collector of a secondary battery, an FPCB, and the like. Thus, the workability of the copper foil 110 may be degraded and the defect rate of the secondary battery may be increased.

On the other hand, when the room temperature puncture strength exceeds 0.875 N/$\mu$m, the elongation of the copper foil 110 becomes very large, and wrinkles may occur due to a force applied during the manufacturing process of the copper foil 110. Thus, the workability of the copper foil 110 may be degraded and the defect rate of the secondary battery may be increased.

Further, according to one embodiment of the present disclosure, the copper foil 110 has a high-temperature puncture strength index of 1.08 N/$\mu$m to 1.56 N/$\mu$m. In this case, the high-temperature puncture strength index is calculated by Equation 2 below.

High-temperature puncture strength index = high-temperature puncture strength/thickness of copper foil     [Equation 2]

When the high-temperature puncture strength index is less than 1.08 N/$\mu$m, due to the nature of the manufacturing process of the copper foil 110, which is conducted at high temperatures, the copper foil 110 has a low elongation at high temperatures, and thus breakage may occur and quality reliability of the copper foil 110 may not be continuously maintained. As a result, an electrode for a secondary battery and a secondary battery may be degraded in cycle lifespan characteristics and stability.

On the other hand, when the high-temperature puncture strength index exceeds 1.56 N/$\mu$m, the copper foil 110 has a high elongation, and due to the nature of the manufacturing process of the copper foil 110, which is conducted at high temperatures, softening may occur during a roll pressing process and/or a drying process, and deterioration of handleability due to wrinkles may occur. As a result, the workability of the copper foil 110 may be degraded and the defect rate of the secondary battery may be increased.

According to one embodiment of the present disclosure, the copper foil 110 has a room temperature water contact angle in a range of 60° to 70°. The term "room temperature water contact angle" used herein refers to a water contact angle measured at room temperature. Specifically, the room temperature water contact angle refers to a water contact angle measured on a surface of the copper foil 110 at 25 °C.

When the room temperature water contact angle of the copper foil 110 exceeds 70°, an active material layer 120 may not be properly coated on the copper foil 110 and adhesive strength therebetween may be reduced. When the active material layer 120 is not properly coated, conductivity may be reduced.

In addition, when the room temperature water contact angle of the copper foil 110 is less than 60°, the surface of the copper foil 110 may be highly polarized, which may result in moisture adsorption. Accordingly, the ability to protect the surface of the copper foil 110 from the atmosphere or moisture may be reduced, and the surface may be oxidized or discolored during storage or transportation.

According to one embodiment of the present disclosure, the copper foil 110 has a room temperature surface resistivity in a range of 2.4 m$\Omega$/cm to 2.7 m$\Omega$/cm. The term "room temperature surface resistivity" used herein refers to a surface resistivity measured at room temperature. Specifically, the room temperature surface resistivity refers to a surface resistivity measured at 25 °C.

When the room temperature surface resistivity of the copper foil 110 exceeds 2.7 m$\Omega$/cm, the efficiency of a secondary battery using the copper foil 110 may be reduced due to the increased resistance. In addition, when the room temperature surface resistivity of the copper foil 110 exceeds 2.7 m$\Omega$/cm, thermal energy during welding may be excessively consumed for the removal of an anticorrosion film because the thickness of the anticorrosion material itself may be excessive, and thus, there is a concern that a weld state with sufficient strength may not be achieved.

On the other hand, when the room temperature surface resistivity of the copper foil 110 is less than 2.4 m$\Omega$/cm, the ability to protect the surface of the copper foil 110 from atmosphere or moisture at room temperature may be reduced, and the surface of the copper foil 110 may be easily oxidized or discolored during storage or transportation.

According to one embodiment of the present disclosure, the copper foil 110 has a water contact angle reduction rate of 0% to 25% after heat treatment at 190 °C for one hour.

When the water contact angle reduction rate of the copper foil 110 after heat treatment at 190 °C for one hour exceeds 25%, the change in water contact angle after heat treatment at 190 °C for one hour is large as compared to that in the room temperature water contact angle. When the change in water contact angle during heat treatment is large, the stability and conductivity of the copper foil 110 may be reduced during heat treatment.

According to one embodiment of the present disclosure, the copper foil 110 has a surface resistance increase rate of 0% to 5% after heat treatment at 190 °C for one hour.

When the surface resistance increase rate of the copper foil 110 after heat treatment at 190 °C for one hour exceeds 5%, the change in surface resistivity after heat treatment at 190 °C for one hour is large as compared to that in the room temperature surface resistivity. When the change in surface resistivity during heat treatment is large, the stability and conductivity of the copper foil 110 may be reduced during heat treatment.

According to one embodiment of the present disclosure, the copper foil 110 has a color difference coefficient in a range of 0.4 to 0.7 based on the Lab color system. In this case, the color difference coefficient is calculated by Equation 3 below.

Color difference coefficient = |color difference E" after stretching-color difference E' before stretching|     [Equation 3]

The color difference E' before stretching of Equation 3 is calculated by Equation 4 below.

[Equation 4]

$$\text{Color difference E' before stretching} = [(L^*_1)^2 + (a^*_1)^2 + (b^*_1)^2]^{1/2}$$

$L^*_1$ in Equation 4 refers to $L^*$ (lightness) before stretching, $a^*_1$ in Equation 4 refers to $a^*$ before stretching, and $b^*_1$ in Equation 4 refers to $b^*$ before stretching.

The color difference E" after stretching in Equation 3 is calculated by Equation 5 below.

[Equation 5]

$$\text{Color difference E" after stretching} = [(L^*_2)^2 + (a^*_2)^2 + (b^*_2)^2]^{1/2}$$

$L^*_2$ in Equation 5 refers to $L^*$ after stretching, $a^*_2$ in Equation 5 refers to $a^*$ after stretching, and $b^*_2$ in Equation 5 refers to $b^*$ after stretching.

In Equations 3 to 5, the stretching of the copper foil 110 is performed under the condition that a width of a sample is 12.7 mm, a distance between grips is 50 mm, and a measurement speed is 50 mm/min.

A color system of the copper foil 110 is a Lab color system with $L^*$, $a^*$, and $b^*$ values, which are measured by a Hunter's photoelectric color difference meter, as coordinates. Based on the Lab color system, a surface of the copper foil 110 becomes white when the $L^*$ value is 100 and becomes black when the $L^*$ value is 0. In addition, the surface becomes red as the $a^*$ value increases in a positive (+) direction, and becomes green as the $a^*$ value decreases in a negative (-) direction. The surface becomes yellow as the $b^*$ value increases in the positive (+) direction, and becomes blue as the $b^*$ value decreases in the negative (-) direction.

According to one embodiment of the present disclosure, the copper foil 110 may have a color difference coefficient in a range of 0.38 to 0.7 based on the Lab color system. When the copper foil 110 according to the present disclosure has the color difference coefficient in the range of 0.38 to 0.7, the copper foil 110 may have a uniform surface structure before and after stretching, allowing the active material to be uniformly coated thereon.

On the other hand, in a case in which the color difference coefficient of the copper foil 110 is less than 0.38, when the copper foil 110 is stretched, a color difference change of the copper foil 110 before and after stretching becomes very small, and thus elongation is reduced and the copper foil 110 may be easily broken. Accordingly, the active material may not be uniformly coated. When the active material is non-uniformly coated on the surface of the copper foil 110 as a result thereof, a short circuit may occur during charging or discharging or a phenomenon in which the active material is delaminated from the copper foil may occur.

In a case in which the color difference coefficient of the copper foil 110 exceeds 0.7, when the copper foil 110 is stretched, the color difference change of the copper foil 110 before and after stretching is increased, and thus the active material may not be uniformly coated due to unevenness of a surface shape of the copper foil 110. When the active material is non-uniformly coated on the surface of the copper foil 110 as a result thereof, a short circuit may occur during charging or discharging or a phenomenon in which the active material is delaminated from the copper foil may occur.

According to one embodiment of the present disclosure, the copper foil 110 may have the color difference E' before stretching in a range of 80 to 85.

When the color difference E' before stretching of the copper foil 110 is less than 80, the surface shape of the copper foil 110 may become uneven, or the surface roughness may be excessively increased, and thus the active material may not be uniformly coated.

When the color difference E' of the copper foil 110 exceeds 85, a surface area of the copper foil 110 is relatively small so that the active material is easily delaminated from the copper foil 110, and as a result, rapid lifespan deterioration of the secondary battery due to a repetition of charging and discharging is caused.

According to one embodiment of the present disclosure, the copper foil 110 may have the color difference E" after stretching in a range of 80 to 85.

When the color difference E" after stretching of the copper foil 110 is less than 80, since the color difference E" after stretching is rapidly reduced as compared to the color difference E' before stretching of the copper foil 110, the surface characteristics of the copper foil 110 are changed, and thus the active material may not be uniformly coated.

When the color difference E" after stretching of the copper foil 110 exceeds 85, since the color difference E" after stretching is rapidly increased as compared to the color difference E' before stretching of the copper foil 110, the surface characteristics of the copper foil 110 are changed, and thus the active material may not be uniformly coated.

According to one embodiment of the present disclosure, the copper foil 110 has a room temperature MIT 1 of 280 or more. The room temperature MIT 1 refers to an MIT number when a bending radius R is 0.38 mm at room temperature. In order to maintain quality reliability without a breakage, the copper foil 110 should have the room temperature MIT 1 of 280 or more.

In this case, the MIT number refers to the number of times of repeated bending until the copper foil is broken in a repeated bending test, and the bending radius R refers to a tip radius during MIT measurement.

When the room temperature MIT 1 of the copper foil 110 is less than 280, during a roll-to-roll manufacturing process, folding of the copper foil 110 may be caused between two adjacent rolls, or wrinkles may be caused at lateral end portions of the copper foil 110. In addition, when the room temperature MIT 1 of the copper foil 110 is less than 280, a breakage may occur, and thus, quality reliability of the copper foil 110 may not be continuously maintained. Thus, workability of the copper foil 110 may be degraded and a defect rate of a secondary battery may be increased.

According to one embodiment of the present disclosure, the copper foil 110 has a high-temperature MIT 1 of 130 or more, and the high-temperature MIT 1 refers to an MIT number when a bending radius R is 0.38 mm after heat treatment at 190 °C for one hour. The copper foil 110 should have the high-temperature MIT 1 of 130 or more in order to maintain quality reliability without a breakage even when subjected to high-temperature processes performed in the manufacture of a secondary battery, or the secondary battery is operated under abnormally high-temperature conditions.

Due to the nature of the manufacturing process of the copper foil 110, which is conducted at high temperatures, in a case in which the high-temperature MIT 1 of the copper foil 110 is less than 130, when the copper foil 110 is operated under high-temperature conditions, a breakage may occur, and thus, the quality reliability of the copper foil 110 may not be continuously maintained. As a result, an electrode for a secondary battery and a secondary battery may be degraded in stability.

According to one embodiment of the present disclosure, the copper foil 110 has a room temperature MIT 2 of 14 or more, and the room temperature MIT 2 refers to an MIT number when the bending radius R is 0.1 mm at room temperature. In order to maintain the quality reliability without a breakage, the copper foil 110 should have the room temperature MIT 2 of 14 or more.

When the room temperature MIT 2 of the copper foil 110 is less than 14, during a roll-to-roll manufacturing process, folding of the copper foil 110 may be caused between two adjacent rolls, or wrinkles may be caused at lateral end portions of the copper foil 110. In addition, when the room temperature MIT 2 of the copper foil 110 is less than 14, a breakage may occur, and thus, the quality reliability of the copper foil 110 may not be continuously maintained. Thus, the workability of the copper foil 110 may be degraded and the defect rate of the secondary battery may be increased.

According to one embodiment of the present disclosure, the copper foil 110 has a high-temperature MIT 2 of 25 or more, and the high-temperature MIT 2 refers to an MIT number when the bending radius R is 0.1 mm after heat treatment at 190 °C for one hour. The copper foil 110 should have the high-temperature MIT 2 in a range of 25 to 35 in order to maintain quality reliability without a breakage even when subjected to high-temperature processes performed in the manufacture of a secondary battery, or the secondary battery is operated under abnormally high-temperature conditions.

Due to the nature of the manufacturing process of the copper foil 110, which is conducted at high temperatures, in a case in which the high-temperature MIT 2 of the copper foil 110 is less than 25, when the copper foil 110 is operated under high-temperature conditions, a breakage may occur, and thus, the quality reliability of the copper foil 110 may not be continuously maintained. As a result, an electrode for a secondary battery and a secondary battery may be degraded in stability.

According to one embodiment of the present disclosure, the copper foil 110 has a room temperature tensile strength of 50 kgf/mm$^2$ or more. The room temperature tensile strength refers to a tensile strength measured at room temperature.

When the room temperature tensile strength of the copper foil 110 is less than 50 kgf/mm$^2$, during a roll-to-roll manufacturing process, folding of the copper foil 110 is caused between two adjacent rolls, or wrinkling is caused at lateral end portions of the copper foil 110. In addition, when the room temperature tensile strength of the copper foil 110 is less than 50 kgf/mm$^2$, flexibility resistance of the copper foil 110 may be reduced.

According to one embodiment of the present disclosure, the copper foil 110 has a high-temperature tensile strength of 40 kgf/mm$^2$ or more. In this case, the high-temperature tensile strength refers to a tensile strength measured after heat treatment at 190 °C for one hour.

Due to the nature of the manufacturing process of the copper foil 110, which is conducted at high temperatures, in a case in which the high-temperature tensile strength of the copper foil 110 is less than 40 kgf/mm$^2$, when the copper foil 110 is operated under high-temperature conditions, softening may occur during a roll pressing process and/or a drying process, and deterioration of handleability due to wrinkles may occur. As a result, the flexibility resistance of the copper foil 110 in a high-temperature condition may be reduced.

According to one embodiment of the present disclosure, the copper foil 110 has a high-temperature grain size in a range of 1.4 μm to 3.1 μm. In this case, the high-temperature grain size refers to a grain size measured after heat treatment at 190 °C for one hour.

When the high-temperature grain size of the copper foil 110 is less than 1.4 μm, sufficient adhesion with an anode active material may not be secured due to a smaller contactable area with the anode active material, and the excessively low elongation may cause the copper foil 110 to break during battery manufacturing. In addition, when the high-temperature grain size of the copper foil 110 is less than 1.4 μm, the flexibility resistance of the copper foil 110 in a high-temperature condition may be reduced.

On the other hand, when the high-temperature grain size of the copper foil 110 exceeds 3.1 μm, due to severe irregularities, the active material may not be uniformly coated, causing the active material to easily delaminate from the copper foil 110, and the tensile strength of the copper foil 110 may be reduced, causing the copper foil 110 to break during battery manufacturing. In addition, when the high-temperature grain size of the copper foil 110 exceeds 3.1 $\mu$m, the flexibility resistance of the copper foil 110 in a high-temperature condition may be reduced.

The copper foil 110 according to one embodiment of the present disclosure has a thickness of 4 $\mu$m to 35 $\mu$m. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of a copper foil 110 having a thickness of less than 4 $\mu$m causes a decrease in workability.

On the other hand, when the secondary battery is manufactured with a copper foil 110 having a thickness exceeding 35 $\mu$m, it becomes difficult to realize high capacity due to the thick copper foil 110.

The copper foil 110 according to one embodiment of the present disclosure has a high-temperature elongation of 2% to 30%. The high-temperature elongation refers to an elongation measured after heat treatment at 190 °C for one hour.

In a case in which the high-temperature elongation of the copper foil 110 is less than 2%, when the copper foil 110 is subjected to high-temperature processes during manufacturing, or operated under high-temperature conditions, there is a high risk that the copper foil 110 cannot be sufficiently stretched in response to the large volume expansion of the high-capacity active material and can tear.

On the other hand, when the high-temperature elongation of the copper foil 110 exceeds 30%, due to the nature of the manufacturing process of the copper foil 110, which is conducted at high temperatures, the copper foil 110 may be easily stretched and deformation of the electrode may occur.

According to one embodiment of the present disclosure, the copper foil 110 may have an arithmetic mean roughness (Ra) of 0.1 $\mu$m to 0.3 $\mu$m.

As the secondary battery is repeatedly charged and discharged, an active material layer may alternately contract and expand, which leads to the separation of the active material layer from the copper foil 110, thus reducing charge and discharge efficiency of the secondary battery. Accordingly, in order to secure a certain level or higher of capacity retention rate and lifespan of the secondary battery (that is, in order to suppress the deterioration of charge and discharge efficiency of the secondary battery), the bonding strength of the copper foil 110 and the active material layer should be high by allowing the copper foil 110 to have an excellent coatability on the active material.

Specifically, as the arithmetic mean roughness (Ra) of the copper foil 110 is smaller, the charge and discharge efficiency of the secondary battery including the copper foil 110 tends to be less degraded. Thus, according to one embodiment of the present disclosure, the copper foil 110 has the arithmetic mean roughness (Ra) of 0.1 $\mu$m to 0.3 $\mu$m.

When the arithmetic mean roughness (Ra) of the copper foil 110 is less than 0.1 $\mu$m, a surface area of the copper foil 110 is relatively small so that the active material is easily delaminated from the copper foil 110, and as a result, rapid lifespan deterioration of the secondary battery due to a repetition of charging and discharging is caused.

On the other hand, when the arithmetic mean roughness (Ra) of the copper foil 110 exceeds 0.3 $\mu$m, a plurality of spaces exist between the copper foil 110 and the active material layer since contact uniformity between the copper foil 110 and the active material layer does not reach a predetermined level (i.e., the coating itself is partially performed), and as a result, rapid lifespan deterioration of the secondary battery due to a repetition of charging and discharging is caused.

Hereinafter, an electrode 100 including the copper foil 110 of the present disclosure and a secondary battery including the electrode 100 will be described in detail.

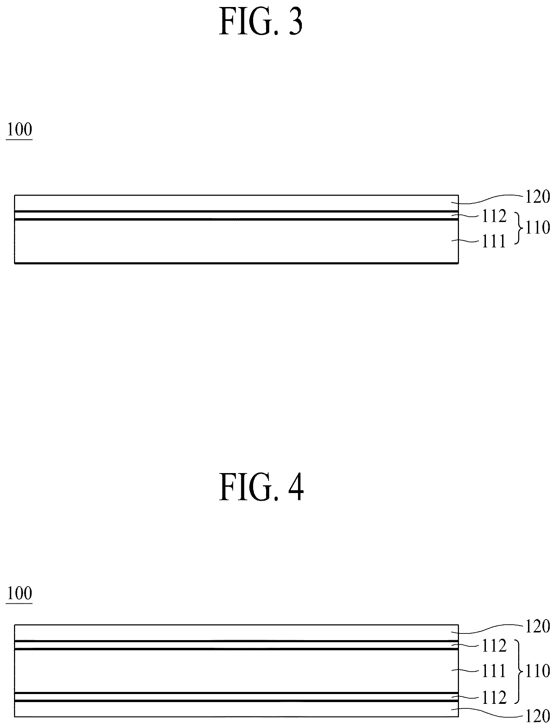

FIG. 3 is a cross-sectional view of an electrode for a secondary battery according to one embodiment of the present disclosure.

As illustrated in FIG. 3, the electrode 100 for a secondary battery according to one embodiment of the present disclosure includes the copper foil 110 of one of the above-described embodiments of the present disclosure and an active material layer 120.

FIG. 3 illustrates a configuration in which the active material layer 120 is formed on one surface of the copper foil 110. However, one embodiment of the present disclosure is not limited thereto, and referring to FIG. 4, the active material layer 120 may be formed on each of both surfaces of the copper foil 110.

Generally, in a lithium secondary battery, an aluminum foil is used as a cathode current collector combined with a cathode active material, and the copper foil 110 is used as an anode current collector combined with an anode active material.

According to one embodiment of the present disclosure, the electrode 100 for a secondary battery is an anode, the copper foil 110 is used as an anode current collector, and the active material layer 120 includes an anode active material.

In order to secure a high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

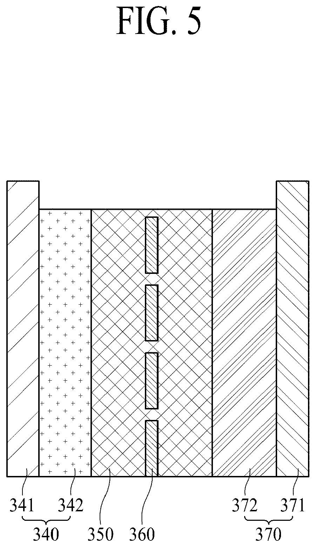

FIG. 5 is a schematic cross-sectional view of a secondary battery according to one embodiment of the present disclosure.

Referring to FIG. 5, the secondary battery includes a cathode 370, an anode 340, an electrolyte 350 disposed between the cathode 370 and the anode 340 to provide an environment in which ions can move, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated at one electrode from being needlessly consumed by moving to another electrode through the inside of the secondary battery. Referring to FIG. 5, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIG. 1 or 2 may be used as the anode current collector 341. In addition, the electrode 100 for a secondary battery illustrated in FIG. 3 or 4 may be used as the anode 340 of the secondary battery illustrated in FIG. 5.

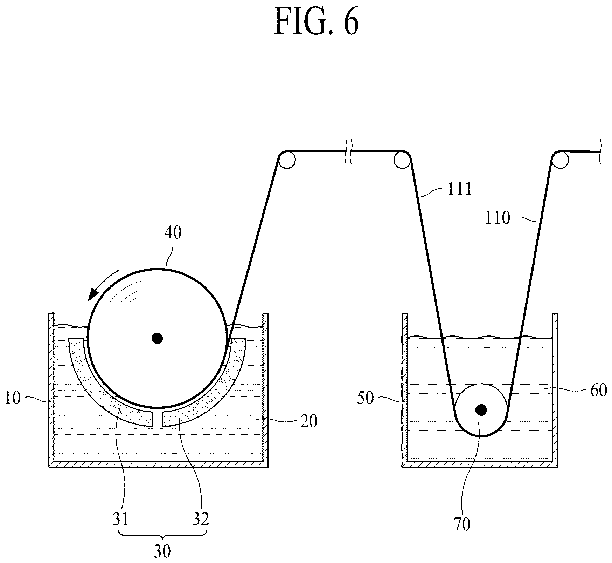

Hereinafter, a method for manufacturing the copper foil 110 of the present disclosure will be described in detail with reference to FIG. 6.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically conducting a cathode plate 30 and the rotating anode drum 40, which are disposed to be spaced apart from each other in an electrolyte 20 in an electrolytic bath 10.

As illustrated in FIG. 6, the cathode plate 30 may include first and second cathode plates 31 and 32 electrically insulated from each other.

The forming of the copper film 111 may be performed by forming a seed layer through an electrical connection between the first cathode plate 31 and the rotating anode drum 40, and then growing a seed layer through an electrical connection between the second cathode plate 32 and the rotating anode drum 40.

A current density provided by each of the first and second cathode plates 31 and 32 may be 30 to 130 ASD $(A/dm^2)$.

When the current density provided by each of the first and second cathode plates 31 and 32 is less than 30 ASD, a surface roughness of the copper foil 110 is reduced, and thus the adhesion between the copper foil 110 and the active material layer 120 may not be sufficient.

On the other hand, when the current density provided by each of the first and second cathode plates 31 and 32 exceeds 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 48 °C to 60 °C. More specifically, the temperature of the electrolyte 20 may be maintained at 50 °C or higher. At this time, the physical, chemical, and electrical characteristics of the copper film 111 may be controlled by adjusting a composition of the electrolyte 20.

According to one embodiment of the present disclosure, the electrolyte 20 may include copper ions at a concentration of 70 g/L to 100 g/L, sulfuric acid at a concentration of 70 g/L to 150 g/L, chlorine (Cl) at a concentration of 1 ppm to 3 ppm, hydrogen peroxide $(H_2O_2)$ at a concentration of 1 ml/L to 10 ml/L, silver ions $(Ag^+)$ at a concentration of 0.1 ppm to 1.0 ppm, cerium ions $(Ce^{2+})$ at a concentration of 2 ppm to 10 ppm, and lead ions $(Pb^{2+})$ at a concentration of 1 ppm to 20 ppm.

In order to facilitate the formation of the copper film 111 through copper electrodeposition, the concentration of copper ions and the concentration of sulfuric acid in the electrolyte 20 are adjusted in a range of 70 g/L to 100 g/L and a range of 70 g/L to 150 g/L, respectively.

In one embodiment of the present disclosure, the chlorine (Cl) includes all of chlorine ions (Cl-) and chlorine atoms present in a molecule. The chlorine (Cl) may, for example, be used to remove silver (Ag) ions input into the electrolyte 20 in a process of forming the copper film 111. Specifically, the chlorine (Cl) may precipitate silver (Ag) ions in the form of silver chloride (AgCl). The silver chloride (AgCl) may be removed through filtration.

When the concentration of chlorine (Cl) is less than 1 ppm, the silver (Ag) ions are not removed well. On the other hand, when the concentration of chlorine (Cl) exceeds 3 ppm, unnecessary reaction may occur due to the excessive amount of chlorine (Cl). Accordingly, the concentration of chlorine (Cl) in the electrolyte 20 is controlled in a range of 1 ppm to 3 ppm.

In order to adjust the concentration of silver (Ag) in the electrolyte 20, chlorine (Cl) may be input into the electrolyte 20. The chlorine (Cl) may precipitate the silver (Ag) in the form of a silver chloride (AgCl) compound such that the concentration of silver (Ag) in the electrolyte 20 may be adjusted. The silver chloride (AgCl) compound may be removed by filtration. According to one embodiment of the present disclosure, in order to adjust the concentration of silver (Ag) in the electrolyte 20, the content of chlorine (Cl) in the electrolyte 20 is maintained at 1 ppm to 3 ppm.

When the concentration of chlorine (Cl) is less than 1 ppm, the silver (Ag) ions are not removed well. On the other hand, when the concentration of chlorine (Cl) exceeds 3 ppm, an unnecessary reaction due to excessive chlorine (Cl) may occur, the copper film 111 that is electrodeposited on the rotating anode drum 40 may have a surface with sharp protrusions, and this surface provides an excellent environment for crystals to expand when the copper foil 110 is heat-treated. As a result, the room temperature water contact angle of the copper foil 110 may fall outside the range of 60° to 70°, and the room temperature surface resistivity may fall outside the range of 2.4 mΩ/cm to 2.7 mΩ/cm. In addition, due to the poor surface state, after heat treatment, the water contact angle may be excessively reduced or the surface resistivity excessively increased.

When the concentration of chlorine (Cl) is less than 1 ppm, the silver (Ag) ions are not removed well. On the other hand, when the concentration of chlorine (Cl) exceeds 3 ppm, an unnecessary reaction due to excessive chlorine (Cl) may occur, the copper film 111 that is electrodeposited on the rotating anode drum 40 may have a surface with sharp protrusions, and this surface provides an excellent environment for crystals to expand when the copper foil 110 is heat-treated. As a result, the color difference coefficient may fall outside the range of 0.38 to 0.7 due to a defect in the surface state of the copper foil 110.

When the concentration of chlorine (Cl) is less than 1 ppm, the silver (Ag) ions are not removed well. On the other hand, when the concentration of chlorine (Cl) exceeds 3 ppm, an unnecessary reaction due to excessive chlorine (Cl) may occur, the copper film 111 that is electrodeposited on the rotating anode drum 40 may have a surface with sharp protrusions, and this surface provides an excellent environment for crystals to expand when the copper foil 110 is heat-treated. Accordingly, the copper foil 110 may not have sufficient values for the room temperature MITs 1 and 2 and the high-temperature MITs 1 and 2. Alternatively, the high-temperature grain size in the range of 1.4 $\mu$m to 3.1 $\mu$m may not be obtained. As a result, a breakage may occur, and thus quality reliability of the copper foil 110 may not be continuously maintained.

According to one embodiment of the present disclosure, the electrolyte 20 including an organic additive may further include hydrogen peroxide ($H_2O_2$). Due to the organic additive, organic impurities may be present in the electrolyte 20 that is continuously plated, and a content of carbon (C) in the copper foil may be appropriately adjusted by decomposing the organic impurities by treating the organic impurities with hydrogen peroxide ($H_2O_2$). As a concentration of total organic carbon (TOC) in the electrolyte 20 is increased, an amount of carbon (C) elements input into the copper film 111 is increased, which causes an increase in total amount of elements detached from the copper film 111 during heat treatment and thus causes a decrease in strength of the copper foil 110 after the heat treatment. As a result, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, the flexibility resistance of the copper foil 110 may be reduced.

The hydrogen peroxide ($H_2O_2$) is added in an amount of 1 ml to 10 ml per one L of the electrolyte. Specifically, the hydrogen peroxide ($H_2O_2$) may be added in an amount of 2 ml to 8 ml per one L of the electrolyte. When the amount of added hydrogen peroxide ($H_2O_2$) is less than 1 ml/L, it is meaningless because there is little effect on the decomposition of organic impurities. When the amount of added hydrogen peroxide ($H_2O_2$) exceeds 10 ml/L, the organic impurities are excessively decomposed, and thus, the effect of inorganic additives such as cerium ions ($Ce^{2+}$) is suppressed.

The hydrogen peroxide ($H_2O_2$) is added in an amount of 1 ml to 10 ml per one L of the electrolyte. Specifically, the hydrogen peroxide ($H_2O_2$) may be added in an amount of 2 ml to 8 ml per one L of the electrolyte. When the amount of the added hydrogen peroxide ($H_2O_2$) is less than 1 ml/L, it is meaningless because there is little effect on the decomposition of organic impurities. As a result, the amount of carbon (C) elements introduced into the copper film 111 increases, which causes an increase in total amount of elements detached from the copper film 111 during heat treatment. As a result, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, the flexibility resistance of the copper foil 110 may be reduced.

According to one embodiment of the present disclosure, the electrolyte 20 may further include silver ions ($Ag^+$). Specifically, the electrolyte 20 may further include the silver ions ($Ag^+$) at a concentration of 0.1 ppm to 1.0 ppm. When the silver ions ($Ag^+$) are maintained at 0.1 ppm to 1.0 ppm, the room temperature puncture strength according to the present disclosure may be maintained at 5.0 N to 7.0 N and the high-temperature puncture strength may be maintained at 8.0 N to 12.5 N. In addition, the room temperature puncture strength index may be maintained at 0.650 N/$\mu$m to 0.875 N/$\mu$m, and the high-temperature puncture strength index may be maintained at 1.08 N/$\mu$m to 1.56 N/$\mu$m.

On the other hand, when the concentration of silver ions ($Ag^+$) is less than 0.1 ppm, the puncture strength is excessively increased, and as a result, the room temperature puncture strength becomes higher than 7.0 N and the high-temperature puncture strength becomes higher than 12.5 N. In addition, the room temperature puncture strength index becomes higher than 0.875 N/$\mu$m, and the high-temperature puncture strength index becomes higher than 1.56 N/$\mu$m.

Further, when the concentration of silver ions ($Ag^+$) exceeds 1.0 ppm, the puncture strength is excessively lowered, and as a result, the room temperature puncture strength becomes less than 5.0 N, and the high-temperature puncture strength becomes less than 8.0 N. In addition, the room temperature puncture strength index becomes less than 0.650 N/$\mu$m, and the high-temperature puncture strength index becomes less than 1.08 N/$\mu$m.

According to one embodiment of the present disclosure, the content of silver ions in the electrolyte 20 is 0.1 ppm to 1 ppm.

When the concentration of silver (Ag) included in the electrolyte 20 is less than 0.1 ppm, the surface state of the copper foil 110 may become excessively poor, and thus the room temperature water contact angle of the copper foil 110 may fall outside the range of 60° to 70°, and the room temperature surface resistivity may fall outside the range of 2.4 m$\Omega$/cm to 2.7 m$\Omega$/cm.

On the other hand, when the concentration of silver (Ag) included in the electrolyte 20 exceeds 1.0 ppm, the surface state of the copper foil 110 may become excessively poor, and thus the room temperature water contact angle of the copper foil 110 may fall outside the range of 60° to 70°, and the room temperature surface resistivity may fall outside the range of 2.4 m$\Omega$/cm to 2.7 m$\Omega$/cm.

When the concentration of silver ions (Ag$^+$) included in the electrolyte 20 is less than 0.1 ppm, the surface state of the copper foil 110 may become excessively poor, and thus, the color difference coefficient may fall outside the range of 0.38 to 0.7.

When the concentration of silver ions (Ag$^+$) included in the electrolyte 20 exceeds 1.0 ppm, the surface state of the copper foil 110 may become excessively poor, and thus, the color difference coefficient may fall outside the range of 0.38 to 0.7.

When the concentration of silver ions (Ag$^+$) included in the electrolyte 20 is less than 0.1 ppm, a surface state of the copper foil 110 may be excessively deteriorated, and thus, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, a breakage may occur in the copper foil 110, and thus, the quality reliability of the copper foil 110 may not be continuously maintained.

When the concentration of silver ions (Ag$^+$) included in the electrolyte 20 exceeds 1.0 ppm, the surface state of the copper foil 110 may be excessively deteriorated, and thus, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, a breakage may occur in the copper foil 110, and thus, the quality reliability of the copper foil 110 may not be continuously maintained.

According to one embodiment of the present disclosure, the content of cerium ions (Ce$^{2+}$) in the electrolyte 20 is 2 ppm to 10 ppm.

When the content of cerium ions (Ce$^{2+}$) in the electrolyte 20 is less than 2 ppm, the tensile strength of the copper foil 110 is lowered, and when a final product with the copper foil 110 is manufactured through a roll-to-roll process, the risk of folding/curling is increased. In addition, when the content of cerium ions (Ce$^{2+}$) in the electrolyte 20 is less than 2 ppm, the puncture strength of the copper foil 110 is excessively lowered, and as a result, the room temperature puncture strength becomes less than 5.0 N, and the high-temperature puncture strength becomes less than 8.0 N. In addition, the room temperature puncture strength index becomes less than 0.650 N/$\mu$m, and the high-temperature puncture strength index becomes less than 1.08 N/$\mu$m.

When the content of cerium ions in the electrolyte 20 is less than 2 ppm, the tensile strength of the copper foil 110 is lowered, and when a final product with the copper foil 110 is manufactured through a roll-to-roll process, the risk of folding/curling is increased. In addition, the surface state of the copper foil 110 becomes poor, and as a result, the room temperature water contact angle of the copper foil 110 may fall outside the range of 60° to 70°, and the room temperature surface resistivity may fall outside the range of 2.4 m$\Omega$/cm to 2.7 m$\Omega$/cm.

When the content of cerium ions (Ce$^{2+}$) in the electrolyte 20 is less than 2 ppm, the tensile strength of the copper foil 110 is lowered, and when a final product with the copper foil 110 is manufactured through a roll-to-roll process, the risk of folding/curling is increased. In addition, the surface state of the copper foil 110 becomes poor, and as a result, the color difference coefficient may fall outside the range of 0.38 to 0.7.

According to one embodiment of the present disclosure, the content of cerium ions (Ce$^{2+}$) in the electrolyte 20 is 2 ppm to 10 ppm. The cerium ions (Ce$^{2+}$) serve as additives that significantly contribute to having high values for the room temperature MITs 1 and 2 and high-temperature MITs 1 and 2, and maintaining the high-temperature grain size in the range of 1.4 $\mu$m to 3.1 $\mu$m, and may be, for example, CeSO$_4$.

When the content of cerium ions (Ce$^{2+}$) in the electrolyte 20 is less than 2 ppm, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, a breakage may occur in the copper foil 110, and thus, the quality reliability of the copper foil 110 may not be continuously maintained.

On the other hand, when the content of cerium ions (Ce$^{2+}$) in the electrolyte 20 exceeds 10 ppm, a significant increase in the room temperature MITs 1 and 2 and the high-temperature MITs 1 and 2 does not occur proportionally with the increase in the content of cerium ions (Ce$^{2+}$). Thus, by adjusting the content of cerium ions (Ce$^{2+}$) in the electrolyte 20 to the range of 2 ppm to 10 ppm, the performance of the copper foil 110 relative to manufacturing costs can be maximized.

On the other hand, when the content of cerium ions ($Ce^{2+}$) in the electrolyte 20 exceeds 10 ppm, a significant increase in puncture strength does not occur proportionally with the increase in the content of cerium ions ($Ce^{2+}$). Thus, by adjusting the content of cerium ions ($Ce^{2+}$) in the electrolyte 20 to the range of 2 ppm to 10 ppm, the performance of the copper foil 110 relative to manufacturing costs can be maximized.

According to one embodiment of the present disclosure, the electrolyte 20 including an organic additive may further include 1 ppm to 20 ppm of lead ions ($Pb^{2+}$). The lead ions ($Pb^{2+}$) in the electrolyte 20 are managed at a concentration of 1 ppm to 20 ppm. In order to maintain the concentration of lead ions ($Pb^{2+}$), a material that does not include lead (Pb) may be used as a raw material input to the electrolyte 20.

When the concentration of lead ions ($Pb^{2+}$) is less than 1 ppm, copper is non-uniformly precipitated, and thus the room temperature puncture strength falls outside the range of 5.0 N to 7.0 N, and the high-temperature puncture strength falls outside the range of 8.0 N to 12.5 N. In addition, the room temperature puncture strength index falls outside the range of 0.650 N/$\mu$m to 0.875 N/$\mu$m, and the high-temperature puncture strength index falls outside the range of 1.08 N/$\mu$m to 1.56 N/$\mu$m.

When the concentration of lead ions ($Pb^{2+}$) exceeds 20 ppm, the lead ions ($Pb^{2+}$) should be removed from the electrolyte 20 by using an ion exchange filter, and the surface roughness may be significantly increased because copper is non-uniformly precipitated, and thus, the puncture strength of the copper foil 110 may be reduced, and when operated at a high-temperature condition, a breakage may occur. As a result, the room temperature puncture strength becomes less than 5.0 N, and the high-temperature puncture strength becomes less than 8.0 N. In addition, the room temperature puncture strength index becomes less than 0.650 N/$\mu$m, and the high-temperature puncture strength index becomes less than 1.08 N/$\mu$m.

According to one embodiment of the present disclosure, the content of lead ions ($Pb^{2+}$) in the electrolyte 20 is 1 ppm to 20 ppm. Specifically, the concentration of lead ions ($Pb^{2+}$) in the electrolyte 20 is managed at a concentration of 1 ppm to 20 ppm. In order to maintain the concentration of lead ions, a material that does not include lead may be used as a raw material input to the electrolyte 20. When the lead ions ($Pb^{2+}$) are maintained at the concentration of 1 ppm to 20 ppm, the room temperature water contact angle according to the present disclosure may be maintained at 60° to 70°, and the room temperature surface resistivity may be maintained at 2.4 m$\Omega$/cm to 2.7 m$\Omega$/cm.

On the other hand, when the concentration of lead ions ($Pb^{2+}$) is less than 1 ppm, a problem may occur where effectiveness is reduced in terms of maintaining the physical properties of the present disclosure. As a result, the room temperature water contact angle may fall outside the range of 60° to 70° and the room temperature surface resistivity may fall outside the range of 2.4 m$\Omega$/cm to 2.7 m$\Omega$/cm.

When the concentration of lead ions ($Pb^{2+}$) exceeds 20 ppm, the lead ions ($Pb^{2+}$) should be removed from the electrolyte 20 by using an ion exchange filter, and the surface roughness may be significantly increased because copper is non-uniformly precipitated. Accordingly, the room temperature water contact angle of the copper foil 110 may fall outside the range of 60° to 70°, and the room temperature surface resistivity may fall outside the range of 2.4 m$\Omega$/cm to 2.7 m$\Omega$/cm. In addition, as copper is non-uniformly precipitated, after heat treatment, the water contact angle may be excessively reduced or the surface resistivity may be excessively increased.

When the concentration of lead ions ($Pb^{2+}$) is less than 1 ppm, a problem may occur where effectiveness is reduced in terms of maintaining the physical properties of the present disclosure. Accordingly, the color difference coefficient may fall outside the range of 0.38 to 0.7.

When the concentration of lead ions ($Pb^{2+}$) exceeds 20 ppm, the lead ions ($Pb^{2+}$) should be removed from the electrolyte 20 by using an ion exchange filter, and the surface roughness may be significantly increased because copper is non-uniformly precipitated, and thus, the active material may not be uniformly coated on the copper foil 110. As a result, the color difference coefficient may fall outside the range of 0.38 to 0.7.

According to one embodiment of the present disclosure, the electrolyte 20 including an organic additive may further include 1 ppm to 20 ppm of lead ions ($Pb^{2+}$). The lead ions ($Pb^{2+}$) in the electrolyte 20 are managed at a concentration of 1 ppm to 20 ppm. In order to maintain the concentration of lead ions ($Pb^{2+}$), a material that does not include lead (Pb) may be used as a raw material input to the electrolyte 20. When the concentration of lead ions ($Pb^{2+}$) exceeds 20 ppm, the lead ions ($Pb^{2+}$) should be removed from the electrolyte 20 by using an ion exchange filter, and the surface roughness may be significantly increased because copper is non-uniformly precipitated. Accordingly, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, a breakage may occur in the copper foil 110, and thus, the quality reliability of the copper foil 110 may not be continuously maintained.

When the concentration of lead ions ($Pb^{2+}$) is less than 1 ppm, a problem may occur where effectiveness is reduced in terms of maintaining the physical properties of the present disclosure. As a result, the copper foil 110 may not have sufficient vales for the room temperature MITs 1 and 2 and the high-temperature MITs 1 and 2, or may not have the high-temperature grain size in the range of 1.4 $\mu$m to 3.1 $\mu$m. As a result, a breakage may occur in the copper foil 110, and thus, the quality reliability of the copper foil 110 may not be continuously maintained.

When forming the copper film 111, a flow rate of the electrolyte 20 supplied into the electrolytic bath 10 may be 41 $m^3$/hour to 45 $m^3$/hour.

The forming of the copper film 111 may include at least one of filtering the electrolyte 20 using activated carbon, filtering the electrolyte 20 using diatomaceous earth, and treating the electrolyte 20 with ozone ($O_3$).

Specifically, the cleanliness of the electrolyte 20 may be maintained or improved by treating the electrolyte 20 with ozone or by inputting hydrogen peroxide and air into the electrolyte 20 while forming the copper film 111 through electroplating. The cleanliness of the electrolyte 20 may also be maintained or improved by filtering the electrolyte 20 through high-purity carbon having a TOC of less than 3 ppm to minimize organic impurities in the electrolyte 20.

In addition, the cleanliness of the electrolyte 20 may be maintained or improved by filtering the electrolyte 20 through high-purity diatomaceous earth having a TOC of less than 5 ppm.

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20. The water-cleaned Cu wire may be input into sulfuric acid for an electrolyte to prepare the electrolyte 20.

According to one embodiment of the present disclosure, in order to satisfy the characteristics of the copper foil 110, a concentration of TOC in the electrolyte 20 is controlled to be 10 ppm or less. That is, the electrolyte 20 may have a TOC concentration of 10 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 6, the method may further include immersing the copper film 111 in an anticorrosion solution 60. When the copper film 111 is immersed in the anticorrosion solution 60, the copper film 111 may be guided by a guide roll 70 disposed in the anticorrosion solution 60.

As described above, the anticorrosion solution 60 may include at least one of a chromium compound, a silane compound, and a nitrogen compound. For example, the copper film 111 may be immersed in a 1g/L to 10 g/L potassium dichromate solution at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one anode active material selected from the group consisting of carbon, a metal (Me) of Si, Ge, Sn, Li, Zn, Mg, Cd, Ce, Ni or Fe, an alloy including the metal (Me), an oxide ($MeO_x$) of the metal (Me), and a composite of the metal (Me) and carbon is coated on one surface or both surfaces the copper foil 110 of the present disclosure prepared through the method as described above to manufacture an electrode (i.e., anode) for a secondary battery of the present disclosure.

For example, 100 parts by weight of carbon for an anode active material, 1 to 3 parts by weight of styrene butadiene rubber (SBR), and 1 to 3 parts by weight of carboxymethyl cellulose (CMC) are mixed and prepared as a slurry using distilled water as a solvent. Subsequently, the slurry is applied on the copper foil 110 to a thickness of 20 $\mu$m to 60 $\mu$m using a doctor blade and pressed at a pressure of 0.5 to 1.5 ton/$cm^2$ at 110 °C to 130 °C.

A secondary battery may be manufactured using the electrode (anode) for a secondary battery of the present disclosure manufactured through the method as described above, together with a conventional cathode, electrolyte and separator.

Hereinafter, the present disclosure will be described in detail with reference to examples and comparative examples. However, the examples described below are only intended to aid understanding of the present disclosure, and the scope of the present disclosure is not limited to these examples.

Examples 1 to 5 and Comparative Examples 1 to 7

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 88 g/L, a concentration of sulfuric acid was set to 105 g/L, a temperature of the electrolyte was set to 55 °C, and a current density was set to 50 ASD

In addition, concentrations of chlorine (Cl), hydrogen peroxide ($H_2O_2$), silver ions ($Ag^+$), cerium ions ($Ce^{2+}$), and lead ions ($Pb^{2+}$) included in the electrolyte 20 are as shown in Table 1 below.

A current at a current density of 50 ASD was applied between the rotating anode drum 40 and the cathode plate 30 to prepare a copper film 111. Thereafter, the copper film 111 was immersed in an anticorrosion solution for about two seconds to perform chromate treatment on the surface of the copper film 111 to form a protective layer 112, thereby preparing a copper foil 110 with a thickness of 8 μm. An anticorrosion solution containing chromic acid as a main component was used as the anticorrosion solution, and a concentration of chromic acid was 5 g/L.

As a result, copper foils of Examples 1 to 5 and Comparative Examples 1 to 7 were prepared.

[Table 1]

| | Electrolyte | | | | | | | Current density (ASD) | Electrolyte temperature (°C) |
|---|---|---|---|---|---|---|---|---|---|
| | Cu (g/L) | Sulfuric acid (g/L) | Chlorine (ppm) | Hydrogen peroxide (ml/L) | $Ag^+$ (ppm) | $Ce^{2+}$ (ppm) | $Pb^{2+}$ (ppm) | | |
| Example 1 | 88 | 105 | 1 | 2 | 0.3 | 3.2 | 10 | 50 | 55 |
| Example 2 | 88 | 105 | 2 | 3 | 0.3 | 3.2 | 10 | 50 | 55 |
| Example 3 | 88 | 105 | 1.5 | 5 | 0.5 | 5 | 10 | 50 | 55 |
| Example 4 | 88 | 105 | 2 | 7 | 0.7 | 3.2 | 10 | 50 | 55 |
| Example 5 | 88 | 105 | 2.5 | 9 | 0.95 | 7 | 10 | 50 | 55 |
| Comparative Example 1 | 88 | 105 | 1.5 | 15 | 0.01 | 3.2 | 10 | 50 | 55 |
| Comparative Example 2 | 88 | 105 | 1.5 | 5 | 0.01 | 15 | 10 | 50 | 55 |
| Comparative Example 3 | 88 | 105 | 2 | 5 | 1.35 | 3.2 | 55 | 50 | 55 |
| Comparative Example 4 | 88 | 105 | 2 | 15 | 0.7 | 15 | 10 | 50 | 55 |
| Comparative Example 5 | 88 | 105 | 1.5 | 0.5 | 0.01 | 3.2 | 55 | 50 | 55 |
| Comparative Example 6 | 88 | 105 | 2 | 5 | 0.5 | 3.2 | 0.1 | 50 | 55 |
| Comparative Example 7 | 88 | 105 | 1.5 | 0 | 0.4 | 0 | 55 | 50 | 55 |

[Table 2]

| | Room temperature puncture strength (N) | High-temperature puncture strength (N) | Puncture strength ratio (%) | Thickness (μm) | Room temperature puncture strength index (N/μm) | High-temperature puncture strength index (N/μm) | High-temperature elongation (%) | Charge and discharge efficiency | Determination |
|---|---|---|---|---|---|---|---|---|---|
| Example 1 | 7.0 | 8.7 | 124% | 8 | 0.875 | 1.08 | 15 | 95 | Good |
| Example 2 | 5.3 | 10.7 | 202% | 8 | 0.662 | 1.33 | 15 | 98 | Good |
| Example 3 | 5.2 | 12.5 | 240% | 8 | 0.650 | 1.56 | 15 | 97 | Good |
| Example 4 | 6.8 | 11.4 | 168% | 8 | 0.850 | 1.42 | 15 | 97 | Good |
| Example 5 | 5.9 | 9.4 | 159% | 8 | 0.737 | 1.17 | 15 | 96 | Good |

(continued)

| | | Room temperature puncture strength (N) | High-temperature puncture strength (N) | Puncture strength ratio (%) | Thickness (μm) | Room temperature puncture strength index (N/μm) | High-temperature puncture strength index (N/μm) | High-temperature elongation (%) | Charge and discharge efficiency | Determination |
|---|---|---|---|---|---|---|---|---|---|---|
| | Comparative Example 1 | 5.3 | 7.2 | 136% | 8 | 0.662 | 0.90 | 1 | 89 | Bad |
| | Comparative Example 2 | 6.4 | 13.4 | 209% | 8 | 0.800 | 1.67 | 1 | 85 | Bad |
| | Comparative Example 3 | 4.9 | 9.8 | 200% | 8 | 0.612 | 1.22 | 35 | 81 | Bad |
| | Comparative Example 4 | 7.4 | 13.1 | 177% | 8 | 0.925 | 1.63 | 35 | 82 | Bad |
| | Comparative Example 5 | 4.5 | 8.1 | 180% | 8 | 0.562 | 1.01 | 35 | 79 | Bad |
| | Comparative Example 6 | 7.6 | 11.4 | 150% | 8 | 0.950 | 1.42 | 1 | 84 | Bad |
| | Comparative Example 7 | 4.8 | 12.8 | 267% | 8 | 0.600 | 1.60 | 1 | 85 | Bad |

For the copper foils prepared according to Examples 1 to 5 and Comparative Examples 1 to 7 as described above, i) room temperature puncture strength, ii) high-temperature puncture strength, iii) puncture strength ratio, iv) thickness, v) room temperature puncture strength index, vi) high-temperature puncture strength index, vii) high-temperature elongation, viii) charge and discharge efficiency were checked.

Measurement of i) room temperature puncture strength and ii) high-temperature puncture strength

The room temperature puncture strength of the copper foil 110 refers to a puncture strength measured at room temperature.

The high-temperature puncture strength of the copper foil 110 refers to a puncture strength measured after heat treatment at 190 °C for one hour.

In this case, the puncture strength was measured according to a test method in accordance with ASTM D4830 (Standard Test Methods for Characterizing Thermoplastic Fabrics Used in Roofing and Waterproofing). A universal testing machine (UTM) was used as a test device. Specifically, a maximum load was measured by clamping a sample between perforated clamp plates having a hole of an inner diameter of 44.45 mm and penetrating the sample with a rod having a diameter of 7.9 mm, a height of 127 mm, and a tip radius of 3.97 mm at a load cell of 200 N and a speed of 300 mm/min. The test was performed under test environmental conditions of a temperature of $23\pm2$ °C and a humidity (R.H.) of $45\pm5\%$.

The high-temperature puncture strength was measured under the same condition as the room temperature puncture strength after heat treatment at 190 °C for one hour.

iii) Calculation of puncture strength ratio

The puncture strength ratio refers to a ratio of the puncture strength after heat treatment at 190 °C for one hour to the room temperature puncture strength.

Iv) Measurement of thickness

The thickness was measured by a unit basis weight method (IPC-TM-650 2.2.12), which is a typical thickness measurement method for a copper foil.

v) Calculation of room temperature puncture strength index

The room temperature puncture strength index is calculated by Equation 1 below.

Room temperature puncture strength index = room temperature puncture strength/thickness of copper foil                    [Equation 1]

vi) Calculation of high-temperature puncture strength index

The high-temperature puncture strength index is calculated by Equation 2 below.

High-temperature puncture strength index=high-temperature puncture strength/thickness of copper foil                    [Equation 2]

vii) Measurement of high-temperature elongation

The high-temperature elongation refers to an elongation measured after heat treatment at 190 °C for one hour.
The elongation was measured using a UTM according to regulations of the IPC-TM-650 test method manual. Specifically, the elongation was measured using a UTM manufactured by Instron company. A width of a sample for measuring elongation was 12.7 mm, a distance between grips was 50 mm, and a test speed was 50 mm/min.

viii) Charge and discharge efficiency

Using a secondary battery manufactured as described above, a capacity per g of a cathode was measured with a charge voltage of 4.3 V and a discharge voltage of 3.4 V. Next, a charging and discharging experiment was performed 100 times at room temperature to calculate the charge and discharge efficiency. The charge and discharge efficiency may be calculated by Equation 1 below.

Charge and discharge efficiency (%)=[(capacity after 100 charges and discharges)/(capacity after one charge and discharge)]×100                    [Equation 1]

The charge and discharge efficiency was measured three times, and an average value thereof was adopted.
When the charge and discharge efficiency is 90% or less, the copper foil was determined to be unsuitable as an anode current collector of an electrode for a secondary battery.
After evaluating the charge and discharge efficiency, the copper foil was marked as "good" when it was determined to be suitable as the anode current collector of the electrode for a secondary battery, and "poor" when it was determined unsuitable.
Referring to Tables 1 and 2, the following results may be confirmed.
It may be confirmed that the copper foil of Comparative Example 1, which is prepared using an electrolyte including hydrogen peroxide in an excessive amount and silver ions (Ag$^+$) in a small amount, has a charge and discharge efficiency of 90% or less.
It may be confirmed that the copper foil of Comparative Example 2, which is prepared using an electrolyte including cerium ions in an excessive amount and silver ions (Ag$^+$) in a small amount, has a charge and discharge efficiency of 90% or less.
It may be confirmed that the copper foil of Comparative Example 3, which is prepared using an electrolyte including lead ions in an excessive amount and silver ions (Ag$^+$) in an excessive amount, has a charge and discharge efficiency of 90% or less.
It may be confirmed that the copper foil of Comparative Example 4, which is prepared using an electrolyte including hydrogen peroxide and cerium ions in excessive amounts, has a charge and discharge efficiency of 90% or less.
It may be confirmed that the copper foil of Comparative Example 5, which is prepared using an electrolyte including hydrogen peroxide and silver ions (Ag$^+$) in small amounts and lead ions in an excessive amount, has a charge and discharge efficiency of 90% or less.
It may be confirmed that the copper foil of Comparative Example 6, which is prepared using an electrolyte including lead ions in a small amount, has a charge and discharge efficiency of 90% or less.
It may be confirmed that the copper foil of Comparative Example 7, which is prepared using an electrolyte including lead ions in an excessive amount and not including hydrogen peroxide and cerium ions, has a charge and discharge efficiency of 90% or less.

Example 6

A copper film was formed on a rotating anode drum by electrically connecting a cathode plate and the rotating anode drum, which are disposed to be spaced apart from each other in an electrolyte in an electrolytic bath. The electrolyte included 88 g/L of copper ions, 105 g/L of sulfuric acid, 2.0 ppm of chlorine ions (Cl-), 5.0 ppm of hydrogen peroxide, 5.0 ppm of lead ions ($Pb^{2+}$), 0.5 ppm of silver ions ($Ag^+$), and 3.2 ppm of cerium ions ($Ce^{2+}$). In the forming of the copper film, the electrolyte was maintained at about 50 °C. A flow rate of the electrolyte supplied into the electrolytic bath was 43 $m^3$/hour. A current density provided to form the copper film was 55 A/$dm^2$. The copper film was immersed in a 5 g/L potassium dichromate solution for 10 seconds at room temperature, and then a drying process was performed to form protective layers on both surfaces of the copper film, thereby completing a copper foil having a thickness of 5 μm.

Examples 7 to 9 and Comparative Examples 8 to 10

Concentrations of additives included in the electrolyte are as shown in Table 3 below. Copper foils were prepared as in Example 6, except for the concentrations of additives.

For the copper foils prepared according to Examples and Comparative Examples described above, water contact angles and surface resistivity were measured as follows, and the results are shown in Table 3 and Table 4.

[Table 3]

| | Electrolyte | | | | | | | Current density (ASD) | Electrolyte temperature (°C) |
|---|---|---|---|---|---|---|---|---|---|
| | Cu (g/L) | Sulfuric acid (g/L) | Chlorine (ppm) | Hydrogen peroxide (ppm) | Lead (ppm) | Silver (ppm) | $Ce^{2+}$ (ppm) | | |
| Example 6 | 88 | 105 | 2.0 | 5.0 | 5.0 | 0.5 | 3.2 | 55 | 50 |
| Example 7 | 88 | 105 | 2.2 | 7.0 | 5.0 | 0.6 | 3.2 | 55 | 50 |
| Example 8 | 88 | 105 | 1.8 | 7.0 | 10 | 0.8 | 5 | 55 | 50 |
| Example 9 | 88 | 105 | 2.5 | 3.0 | 15 | 0.3 | 3.2 | 55 | 50 |
| Comparative Example 8 | 88 | 105 | 0.1 | 0.5 | 5.0 | 1.5 | 3.2 | 55 | 50 |
| Comparative Example 9 | 88 | 105 | 2.0 | 5.0 | 21 | 0.5 | 12.5 | 55 | 50 |
| Comparative Example 10 | 88 | 105 | 1.8 | 0.1 | 0.1 | 0.5 | 0.8 | 55 | 50 |

[Table 4]

| | Room temperature water contact angle | Water contact angle after heat treatment | Water contact angle reduction rate (%) | Room temperature surface resistivity | Surface resistivity after heat treatment | Surface resistance increase rate (%) |
|---|---|---|---|---|---|---|
| Example 6 | 63.4 | 56.43 | 11 | $2.44 \times 10^{-3}$ | $2.49 \times 10^{-3}$ | 2.1 |
| Example 7 | 65.6 | 51.82 | 21 | $2.65 \times 10^{-3}$ | $2.69 \times 10^{-3}$ | 1.5 |
| Example 8 | 64.4 | 53.45 | 17 | $2.61 \times 10^{-3}$ | $2.70 \times 10^{-3}$ | 3.3 |
| Example 9 | 62.1 | 57.75 | 7 | $2.57 \times 10^{-3}$ | $2.64 \times 10^{-3}$ | 2.7 |
| Comparative Example 8 | 59.7 | 41.19 | 31 | $2.31 \times 10^{-3}$ | $2.43 \times 10^{-3}$ | 5.3 |
| Comparative Example 9 | 58.4 | 42.63 | 27 | $2.35 \times 10^{-3}$ | $2.54 \times 10^{-3}$ | 8.1 |
| Comparative Example 10 | 70.8 | 46.02 | 35 | $2.71 \times 10^{-3}$ | $2.98 \times 10^{-3}$ | 10.1 |

For the copper foils prepared according to Examples 6 to 9 and Comparative Examples 8 to 10 as described above, i) room temperature water contact angle, ii) water contact angle after heat treatment, iii) water contact angle reduction rate, iv) room temperature surface resistivity, v) surface resistivity after heat treatment, and vi) surface resistance increase rate were checked.

Measurement of i) room temperature water contact angle and ii) water contact angle after heat treatment

The room temperature water contact angle of the copper foil 110 refers to a water contact angle measured at room temperature.

The water contact angle after heat treatment of the copper foil 110 refers to a water contact angle measured after heat treatment at 190 °C for one hour.

In this case, the water contact angle was measured according to a test method in accordance with ASTM D5946. Phoenix 300 from SEO (Surface Electro Optics) was used as a test device. The test was performed under test environment conditions of a temperature of 23±2 °C and a humidity (R.H.) of 45±5%.

The water contact angle after heat treatment was measured after heat treatment at 190 °C for one hour, that is, under the same conditions as the room temperature water contact angle other than the temperature.

iii) Calculation of water contact angle reduction rate

The water contact angle reduction rate refers to a ratio of a reduced water contact angle after heat treatment at 190 °C for one hour to the room temperature water contact angle.

Measurement of iv) room temperature surface resistivity and iv) surface resistivity after heat treatment

The room temperature surface resistivity of the copper foil 110 refers to a surface resistivity measured at room temperature.

The surface resistivity after heat treatment of the copper foil 110 refers to a surface resistivity measured after heat treatment at 190 °C for one hour.

The surface resistivity of the copper foil 110 was measured according to ASTM D991 using MCP-T610 manufactured by Mitsubishi. In this case, the limit voltage was 10 V and a resistivity correction factor (RCF) was 4.185.

The surface resistivity after heat treatment was measured after heat treatment at 190 °C for one hour, that is, under the same conditions as the room temperature surface resistivity other than the temperature.

v) Calculation of surface resistance increase rate

The surface resistance increase rate refers to a ratio of an increased surface resistivity after heat treatment at 190 °C for one hour to the room temperature surface resistivity.

Referring to Tables 3 and 4 above, the following results may be confirmed.

In the copper foil of Comparative Example 8 prepared using an electrolyte including chlorine and hydrogen peroxide in small amounts and silver ions in an excessive amount, the room temperature water contact angle did not satisfy 60° to 70°, and the room temperature surface resistivity did not satisfy 2.4 mΩ/cm to 2.7 mΩ/cm. In addition, the water contact angle reduction rate after heat treatment at 190 °C for one hour exceeded 25%, and the surface resistance increase rate after heat treatment at 190 °C for one hour exceeded 5%. As a result, the changes in the water contact angle and the surface resistivity after heat treatment were large, which reduced the conductivity of the copper foil.

In the copper foil of Comparative Example 9 prepared using an electrolyte including lead ions and cerium ions in excessive amounts, the room temperature water contact angle did not satisfy 60° to 70°, and the room temperature surface resistivity did not satisfy 2.4 mΩ/cm to 2.7 mΩ/cm. In addition, the water contact angle reduction rate after heat treatment at 190 °C for one hour exceeded 25%, and the surface resistance increase rate after heat treatment at 190 °C for one hour exceeded 5%. As a result, the changes in the water contact angle and the surface resistivity after heat treatment were large, which reduced the conductivity of the copper foil.

In the copper foil of Comparative Example 10 prepared using an electrolyte including hydrogen peroxide, lead ions, and cerium ions in small amounts, the room temperature water contact angle did not satisfy 60° to 70°, and the room temperature surface resistivity did not satisfy 2.4 mΩ/cm to 2.7 mΩ/cm. In addition, the water contact angle reduction rate after heat treatment at 190 °C for one hour exceeded 25%, and the surface resistance increase rate after heat treatment at 190 °C for one hour exceeded 5%. As a result, the changes in the water contact angle and the surface resistivity after heat treatment were large, which reduced the conductivity of the copper foil.

On the other hand, all the copper foils of Examples 6 to 9 according to the present disclosure satisfied values within the above standard ranges, and as a result, the conductivity of the copper foil was not reduced.

Examples 10 to 14 and Comparative Examples 11 to 15

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 88 g/L, a concentration of sulfuric acid was set to 105 g/L, a temperature of the electrolyte was set to 55 °C, and a current density was set to 50 ASD

In addition, concentrations of chlorine (Cl), hydrogen peroxide ($H_2O_2$), cerium ions ($Ce^{2+}$), and lead ions ($Pb^{2+}$) included in the electrolyte 20 are as shown in Table 5 below.

A current at a current density of 50 ASD was applied between the rotating anode drum 40 and the cathode plate 30 to prepare a copper film 111. Thereafter, the copper film 111 was immersed in an anticorrosion solution for about two seconds to perform chromate treatment on the surface of the copper film 111 to form a protective layer 112, thereby preparing a copper foil 110. An anticorrosion solution containing chromic acid as a main component was used as the anticorrosion solution, and a concentration of chromic acid was 5 g/L.

As a result, copper foils of Examples 10 to 14 and Comparative Examples 11 to 15 were prepared.

[Table 5]

| | Electrolyte | | | | | | | Current density (ASD) | Electrolyte temperature (°C) |
| | Cu (g/L) | Sulfuric acid (g/L) | Chlorine (ppm) | Hydrogen peroxide (ml/L) | $Ag^+$ (ppm) | $Ce^{2+}$ (ppm) | $Pb^{2+}$ (ppm) | | |
|---|---|---|---|---|---|---|---|---|---|
| Example 10 | 88 | 105 | 2.0 | 5.0 | 0.5 | 3.2 | 5.0 | 50 | 55 |
| Example 11 | 88 | 105 | 2.2 | 7.0 | 0.6 | 3.2 | 5.0 | 50 | 55 |
| Example 12 | 88 | 105 | 1.8 | 7.0 | 0.8 | 5 | 10 | 50 | 55 |
| Example 13 | 88 | 105 | 2.5 | 3.0 | 0.3 | 3.2 | 15 | 50 | 55 |
| Example 14 | 88 | 105 | 2.0 | 5.0 | 0.3 | 7 | 17 | 50 | 55 |
| Comparative Example 11 | 88 | 105 | 0.1 | 0.5 | 1.5 | 3.2 | 10 | 50 | 55 |
| Comparative Example 12 | 88 | 105 | 2.0 | 5.0 | 0.5 | 15 | 50 | 50 | 55 |
| Comparative Example 13 | 88 | 105 | 2.0 | 15 | 0.5 | 0.1 | 10 | 50 | 55 |
| Comparative Example 14 | 88 | 105 | 5.0 | 5.0 | 0.5 | 15 | 10 | 50 | 55 |
| Comparative Example 15 | 88 | 105 | 0.2 | 5.0 | 1.3 | 3.2 | 0.1 | 50 | 55 |

[Table 6]

| | Chroma value before stretching | | | Chroma value after stretching | | | Color difference E' before stretching | Color difference E" after stretching | Color difference coefficient | Coating |
| | $L^*_1$ | $a^*_1$ | $b^*_1$ | $L^*_2$ | $a^*_2$ | $b^*_2$ | | | | |
|---|---|---|---|---|---|---|---|---|---|---|
| Example 10 | 78.78 | 18.46 | 17.88 | 78.09 | 18.42 | 18.15 | 82.86 | 82.26 | 0.60 | Good |
| Example 11 | 76.94 | 19.87 | 19.25 | 76.24 | 19.51 | 19.48 | 81.76 | 81.07 | 0.69 | Good |
| Example 12 | 78.47 | 18.53 | 18.10 | 78.01 | 18.45 | 18.40 | 82.63 | 82.25 | 0.39 | Good |
| Example 13 | 79.81 | 18.12 | 17.46 | 79.45 | 17.72 | 17.50 | 83.68 | 83.26 | 0.42 | Good |
| Example 14 | 77.92 | 19.10 | 18.53 | 77.47 | 18.74 | 18.60 | 82.34 | 81.85 | 0.49 | Good |
| Comparative Example 11 | 85.11 | 13.90 | 16.80 | 85.40 | 14.47 | 16.72 | 87.86 | 88.22 | 0.36 | Bad |
| Comparative Example 12 | 82.80 | 17.47 | 18.37 | 83.05 | 17.49 | 17.61 | 86.59 | 86.68 | 0.09 | Bad |
| Comparative Example 13 | 82.60 | 17.27 | 18.27 | 82.90 | 17.45 | 18.10 | 86.34 | 86.63 | 0.29 | Bad |

(continued)

| | Chroma value before stretching | | | Chroma value after stretching | | | Color difference E' before stretching | Color difference E" after stretching | Color difference coefficient | Coating |
|---|---|---|---|---|---|---|---|---|---|---|
| | $L^*_1$ | $a^*_1$ | $b^*_1$ | $L^*_2$ | $a^*_2$ | $b^*_2$ | | | | |
| Comparative Example 14 | 74.85 | 16.55 | 18.12 | 75.02 | 17.10 | 17.98 | 78.77 | 79.02 | 0.25 | Bad |
| Comparative Example 15 | 73.40 | 16.87 | 17.79 | 74.01 | 17.62 | 17.72 | 77.39 | 78.11 | 0.73 | Bad |

For the copper foils prepared according to Examples 10 to 14 and Comparative Examples 11 to 15 as described above, i) chroma values $L^*_1$, $a^*_1$, and $b^*_1$ before stretching, ii) chroma values $L^*_2$, $a^*_2$, and $b^*_2$ after stretching, iii) color difference E' before stretching, iv) color difference E" after stretching, v) color difference coefficient, and vi) coatability were checked.

Measurement of i) chroma value before stretching and ii) chroma value after stretching

The chroma value before stretching of the copper foil 110 refers to a chroma value measured before stretching.
The chroma value after stretching of the copper foil 110 refers to a chroma value measured after stretching. In detail, color difference E" after stretching is measured on the broken sample after stretching.
Here, the stretching of the copper foil 110 is performed under the condition that a width of a sample is 12.7 mm, a distance between grips is 50 mm, and a measurement speed is 50 mm/min.
$L^*_1$, $a^*_1$, and $b^*_1$ of the Lab color system were measured in accordance with ASTM E1164 using a Model CM-5 manufactured by Konica Minolta, Inc. as a measuring device.
Conditions of the measuring device are as follows.

Light source: xenon lamp D65
Viewing angle: 10°
Wavelength range: 360 nm to 740 nm
Wavelength interval: 10 nm
Reference: air
$L^*_2$, $a^*_2$, and $b^*_2$ were measured by the same method as $L^*_1$, $a^*_1$, and $b^*_1$ after stretching described above.

Calculation of iii) color difference E' before stretching and iv) color difference E" after stretching

Color difference E' before stretching is calculated by Equation 4 below using the measured $L^*_1$, $a^*_1$, and $b^*_1$.

[Equation 4]

$$\text{Color difference E' before stretching} = [(L^*_1)^2 + (a^*_1)^2 + (b^*_1)^2]^{1/2}$$

Color difference E" after stretching is calculated by Equation 5 below using the measured $L^*_2$, $a^*_2$, and $b^*_2$.

[Equation 5]

$$\text{Color difference E'' after stretching} = [(L^*_2)^2 + (a^*_2)^2 + (b^*_2)^2]^{1/2}$$

v) Calculation of color difference coefficient

The color difference coefficient is calculated by Equation 3 below using the measured color difference E' before stretching and color difference E" after stretching.

Color difference coefficient = |color difference E" after stretching-color difference E' before stretching|　　　[Equation 3]

vi) Coatability

Slide glass was attached to one surface of double-sided tape, and an active material portion of an anode for a secondary battery is attached to the other surface of the double-sided tape. After fixing the slide glass to a lower portion of a universal testing machine (UTM), an adhesion was measured while peeling off the copper foil.

- Measurement tester: UTM
- Sample width: 12.7 mm
- Measurement type: 180° peel test
- Measurement speed: 50 mm/min

After evaluating the coatability, the copper foil was marked as "good" when it was determined to be suitable as an anode current collector of an electrode for a secondary battery, and "poor" when it was determined unsuitable.

Referring to Tables 5 and 6, the following results may be confirmed.

It may be confirmed that the copper foil of Comparative Example 11 prepared using an electrolyte including chlorine ions and hydrogen peroxide in small amounts and silver ions in an excessive amount has poor adhesion to the active material.

It may be confirmed that the copper foil of Comparative Example 12 prepared using an electrolyte including cerium ions and lead ions in excessive amounts has poor adhesion to the active material.

It may be confirmed that the copper foil of Comparative Example 13 prepared using an electrolyte including hydrogen peroxide in an excessive amount and cerium ions in a small amount has poor adhesion to the active material.

It may be confirmed that the copper foil of Comparative Example 14 prepared using an electrolyte including chlorine ions and cerium ions in excessive amounts has poor adhesion to the active material.

It may be confirmed that the copper foil of Comparative Example 15 prepared using an electrolyte including chlorine ions and the lead ions ($Pb^{2+}$) in small amounts and silver ions in an excessive amount has poor adhesion to the active material.

On the other hand, all the copper foils of Examples 10 to 14 according to the present disclosure satisfied with values within the above standard ranges, and as a result, it may be confirmed that the adhesion between the copper foil and the active material is normal.

Examples 15 to 19 and Comparative Examples 16 to 21

A copper foil was prepared using a foil maker including an electrolytic bath 10, a rotating anode drum 40 disposed in the electrolytic bath 10, and a cathode plate 30 disposed to be spaced apart from the rotating anode drum 40. An electrolyte 20 was a copper sulfate solution. A concentration of copper ions in the electrolyte 20 was set to 88 g/L, a concentration of sulfuric acid was set to 105 g/L, a temperature of the electrolyte was set to 55 °C, and a current density was set to 50 ASD

In addition, concentrations of chlorine (Cl), hydrogen peroxide ($H_2O_2$), silver ions ($Ag^+$), lead ions ($Pb^{2+}$), and cerium ions ($Ce^{2+}$) included in the electrolyte 20 are as shown in Table 7 below.

A current at a current density of 50 ASD was applied between the rotating anode drum 40 and the cathode plate 30 to prepare a copper film 111. Thereafter, the copper film 111 was immersed in an anticorrosion solution for about two seconds to perform chromate treatment on the surface of the copper film 111 to form a protective layer 112, thereby preparing a copper foil 110. An anticorrosion solution containing chromic acid as a main component was used as the anticorrosion solution, and a concentration of chromic acid was 5 g/L.

As a result, copper foils of Examples 15 to 19 and Comparative Examples 16 to 21 were prepared.

[Table 7]

| | Electrolyte | | | | | | | Current density (ASD) | Electrolyte temperature (°C) |
|---|---|---|---|---|---|---|---|---|---|
| | Cu (g/L) | Sulfuric acid (g/L) | Chlorine (ppm) | Hydrogen peroxide (ml/L) | $Ag^+$ (ppm) | $Ce^{2+}$ (ppm) | $Pb^{2+}$ (ppm) | | |
| Example 15 | 88 | 105 | 1 | 2 | 0.2 | 3.2 | 5.0 | 50 | 55 |
| Example 16 | 88 | 105 | 2 | 3 | 0.2 | 3.2 | 5.0 | 50 | 55 |
| Example 17 | 88 | 105 | 1.5 | 5 | 0.5 | 5 | 10 | 50 | 55 |
| Example 18 | 88 | 105 | 2 | 7 | 0.5 | 3.2 | 10 | 50 | 55 |

(continued)

| | Electrolyte | | | | | | | Current density (ASD) | Electrolyte temperature (°C) |
|---|---|---|---|---|---|---|---|---|---|
| | Cu (g/L) | Sulfuric acid (g/L) | Chlorine (ppm) | Hydrogen peroxide (ml/L) | $Ag^+$ (ppm) | $Ce^{2+}$ (ppm) | $Pb^{2+}$ (ppm) | | |
| Example 19 | 88 | 105 | 2.5 | 9 | 0.7 | 7 | 15 | 50 | 55 |
| Comparative Example 16 | 88 | 105 | 1.5 | 15 | 0.6 | 0.1 | 10 | 50 | 55 |
| Comparative Example 17 | 88 | 105 | 5 | 5 | 0.01 | 3.2 | 10 | 50 | 55 |
| Comparative Example 18 | 88 | 105 | 2 | 7 | 0.5 | 15 | 50 | 50 | 55 |
| Comparative Example 19 | 88 | 105 | 1.5 | 5 | 0.5 | 0.1 | 0.1 | 50 | 55 |
| Comparative Example 20 | 88 | 105 | 2 | 15 | 0.5 | 0.1 | 0.1 | 50 | 55 |
| Comparative Example 21 | 88 | 105 | 0.1 | 5 | 3.0 | 3.2 | 50 | 50 | 55 |

[Table 8]

| | the room temperature MIT 1 | High-temperature MIT 1 | the room temperature MIT 2 | High-temperature MIT 2 | High-temperature grain size ($\mu$m) | Occurrence of breakage |
|---|---|---|---|---|---|---|
| Example 15 | 496.6 | 147.2 | 21.0 | 32.0 | 3.0 | Normal |
| Example 16 | 387.4 | 142.3 | 18.1 | 29.1 | 2.2 | Normal |
| Example 17 | 387.4 | 138.1 | 17.4 | 28.7 | 2.1 | Normal |
| Example 18 | 350.9 | 135.2 | 15.0 | 28.0 | 1.5 | Normal |
| Example 19 | 288.4 | 145.8 | 19.9 | 30.9 | 2.5 | Normal |
| Comparative Example 16 | 432.5 | 98.4 | 13.7 | 17.2 | 0.8 | Bad |
| Comparative Example 17 | 278.4 | 197.0 | 25.4 | 35.2 | 3.7 | Bad |
| Comparative Example 18 | 512.1 | 165.8 | 20.7 | 36.4 | 3.2 | Bad |
| Comparative Example 19 | 480.7 | 129.1 | 14.4 | 22.8 | 1.3 | Bad |
| Comparative Example 20 | 284.1 | 117.4 | 18.0 | 27.5 | 1.2 | Bad |
| Comparative Example 21 | 264.2 | 168.1 | 27.4 | 37.1 | 3.7 | Bad |

For the copper foils of Examples 15 to 19 and Comparative Examples 16 to 21 prepared as described above, i) room temperature MIT 1, ii) high-temperature MIT 1, iii) room temperature MIT 2, iv) high-temperature MIT 2, v) high-temperature grain size, and vi) occurrence of breakage were checked.

Measurement of i) room temperature MIT 1 and ii) high-temperature MIT 1

The room temperature MIT 1 of the copper foil 110 refers to MIT 1 measured at room temperature.
The high-temperature MIT 1 of the copper foil 110 refers to MIT 1 measured after heat treatment at 190 °C for one hour.
Here, the MIT 1 refers to an MIT number when a bending radius R is 0.3 mm, and the MIT number refers to the number of times of repeated bending until the copper foil 110 is broken in a repeated bending test. The test method was as follows. The MIT number in Table 2 refers to an average of values measured by performing a repeated bending test three times.

> Equipment: No.530 MIT type Folding Endurance Tester Model D-2 (Toyo Seiki Seisaku-sho, Ltd.)
> Load: 250g
> Weight height: 10 mm
> Bending angle: 135°
> Speed: 175 cpm
> Clearance: 0.25 mm
> Sample width: 15 mm
> Cutting direction: machine direction (MD)
> Measurement of iii) room temperature MIT 2 and iv) high-temperature MIT 2

The room temperature MIT 2 of the copper foil 110 refers to MIT 2 measured at room temperature.

The high-temperature MIT 2 of the copper foil 110 refers to MIT 2 measured after heat treatment at 190 °C for one hour.

In this case, the MIT 2 refers to an MIT number when the bending radius R is 0.1 mm. The measurements for iii) room temperature MIT 2 and iv) high-temperature MIT 2 were performed after heat treatment at 190 °C for one hour while maintaining the same conditions as those for i) room temperature MIT 1 and ii) high-temperature MIT 1, except for the temperature.

Measurement of v) high-temperature grain size

The high-temperature grain size of the copper foil 110 refers to a grain size measured after heat treatment at 190 °C for one hour.

The grain size of the copper foil was measured using an electron backscattered diffraction (EBSD) method (measuring device: Oxford instruments, AztecHKL NordlysNano EBSD).

vi) Occurrence of breakage

After 100 charges and discharges, the secondary battery was disassembled to observe whether a breakage occurred in the copper foil. The copper foil was marked as "bad" when a breakage occurred in the copper foil, and "normal" when no breakage was observed.

Referring to Tables 7 and 8, the following results may be confirmed.

It may be confirmed that a breakage occurred in the copper foil of Comparative Example 16 prepared using an electrolyte including hydrogen peroxide in an excessive amount and cerium ions in a small amount.

It may be confirmed that a breakage occurred in the copper foil of Comparative Example 17 prepared using an electrolyte including chlorine in an excessive amount and silver ions in a small amount.

It may be confirmed that a breakage occurred in the copper foil of Comparative Example 18 prepared using an electrolyte including cerium ions and lead ions in an excessive amount.

It may be confirmed that a breakage occurred in the copper foil of Comparative Example 19 prepared using an electrolyte including cerium ions and lead ions in small amounts.

It may be confirmed that a breakage occurred in the copper foil of Comparative Example 20 prepared using an electrolyte including hydrogen peroxide in an excessive amount and cerium ions and lead ions in small amounts.

It may be confirmed that a breakage occurred in the copper foil of Comparative Example 21 prepared using an electrolyte including chlorine in a small amount and silver ions and lead ions in excessive amounts.

It will be apparent to those skilled in the art that the present disclosure described above is not limited by the above-described embodiments and the accompanying drawings and that various substitutions, modifications, and variations can be made in the present disclosure without departing from the spirit and scope of the present disclosure. Accordingly, the scope of the present disclosure is defined by the accompanying claims, and it is intended that all variations and modifications derived from the meaning, scope, and equivalent concept of the claims fall within the scope of the present disclosure.

**Claims**

1. A copper foil comprising:

a copper film including 99.9 wt% or more of copper; and

a protective layer formed on the copper film,

wherein the copper foil has a room temperature puncture strength in a range of 5.0 N to 7.0 N, and a high-temperature puncture strength in a range of 8.0 N to 12.5 N,

wherein the high-temperature puncture strength is a puncture strength measured after heat treatment at 190 °C for one hour.

2. The copper foil of claim 1, wherein the copper foil has a puncture strength ratio of 120% or more,

wherein the puncture strength ratio refers to a ratio of the high-temperature puncture strength to the room temperature puncture strength.

3. The copper foil of claim 1, wherein the copper foil has a room temperature puncture strength index of 0.650 N/$\mu$m to 0.875 N/$\mu$m, and a high-temperature puncture strength index of 1.08 N/$\mu$m to 1.56 N/$\mu$m,

wherein the room-temperature puncture strength index is calculated by Equation 1 below,

the high-temperature puncture strength index is calculated by Equation 2 below, room temperature puncture strength index = room temperature puncture strength/thickness of copper foil, and [Equation 1]

high-temperature puncture strength index = high-temperature puncture strength/thickness of copper foil [Equation 2]

4. The copper foil of claim 1, wherein the copper foil has a high-temperature elongation of 2% to 30%,

wherein the high-temperature elongation is an elongation measured after heat treatment at 190 °C for one hour.

5. The copper foil of claim 1, wherein the copper foil has an arithmetic mean roughness (Ra) of 0.1 $\mu$m to 0.3 $\mu$m.

6. The copper foil of claim 1, further comprising a protective layer formed on the copper film.

7. The copper foil of claim 6, wherein the protective layer includes at least one of a chromium compound, a silane compound, and a nitrogen compound.

8. A method for manufacturing a copper foil, the method comprising:

preparing an electrolyte containing copper ions;

forming a copper film; and

forming a protective layer on the copper film,

wherein the forming of the copper film includes forming the copper film on a rotating anode drum by electrically connecting a cathode plate and the rotating anode drum, which are disposed to be spaced apart from each other in the electrolyte in an electrolytic bath, and

the electrolyte includes:

copper ions at a concentration of 70 g/L to 100 g/L;

sulfuric acid at a concentration of 70 g/L to 150 g/L;

chlorine (Cl) at a concentration of 1 ppm to 3 ppm;

hydrogen peroxide at a concentration of 1 ml/L to 10 ml/L;

silver ions ($Ag^+$) at a concentration of 0.1 ppm to 1.0 ppm;

cerium ions ($Ce^{2+}$) at a concentration of 2 ppm to 10 ppm; and

lead ions ($Pb^{2+}$) at a concentration of 1 ppm to 20 ppm.

9. A copper foil comprising:

a copper film including 99.9 wt% or more of copper; and

a protective layer formed on the copper film,

wherein the copper foil has a room temperature water contact angle in a range of 60° to 70°, and a room temperature surface resistivity in a range of 2.4 mΩ/cm to 2.7 mΩ/cm.

10. The copper foil of claim 9, wherein the copper foil has a water contact angle reduction rate after heat treatment at 190 °C for one hour in a range of 0% to 25%.

11. The copper foil of claim 9, wherein the copper foil has a surface resistance increase rate after heat treatment at 190 °C for one hour in a range of 0% to 5%.

12. The copper foil of claim 9, wherein the copper foil has an arithmetic mean roughness (Ra) of 0.1 $\mu$m to 0.3 $\mu$m.

13. The copper foil of claim 9, wherein the protective layer includes at least one of a chromium compound, a silane compound, and a nitrogen compound.

14. A copper foil comprising a copper film including 99.9 wt% or more of copper,

wherein the copper foil has a color difference coefficient in a range of 0.38 to 0.7 based on the Lab color system, wherein the color difference coefficient is calculated by Equation 3 below, color difference coefficient = |color difference (E") after stretching-color difference (E') before stretching|　　　　[Equation 3]

wherein the color difference (E') before stretching of Equation 3 is calculated by Equation 4 below,

[Equation 4]

$$\text{color difference (E') before stretching} = [(L^*_1)^2 + (a^*_1)^2 + (b^*_1)^2]^{1/2}$$

wherein $L^*_1$ in Equation 4 refers to L* before stretching,
$a^*_1$ in Equation 4 refers to a* before stretching, and
$b^*_1$ in Equation 4 refers to b* before stretching, and
the color difference (E") after stretching of Equation 3 is calculated by Equation 5 below,

[Equation 5]

$$\text{color difference (E'') after stretching} = [(L^*_2)^2 + (a^*_2)^2 + (b^*_2)^2]^{1/2}$$

wherein $L^*_2$ in Equation 5 refers to L* after stretching,
$a^*_2$ in Equation 5 refers to a* after stretching, and
$b^*_2$ in Equation 5 refers to b* after stretching.

15. The copper foil of claim 14, wherein the color difference (E') before stretching is in a range of 80 to 85.

16. The copper foil of claim 14, wherein the color difference (E") after stretching is in a range of 80 to 85.

17. The copper foil of claim 14, wherein the copper foil has a high-temperature elongation of 2% to 20%,
wherein the high-temperature elongation is an elongation measured after heat treatment at 190 °C for one hour.

18. The copper foil of claim 14, wherein the copper foil has an arithmetic mean roughness (Ra) of 0.1 $\mu$m to 0.3 $\mu$m.

19. The copper foil of claim 14, further comprising a protective layer formed on the copper film.

20. The copper foil of claim 19, wherein the protective layer includes at least one of a chromium compound, a silane compound, and a nitrogen compound.

21. A copper foil comprising a copper film including 99.9 wt% or more of copper,

wherein the copper foil has a room temperature MIT 1 of 280 or more, a high-temperature MIT 1 of 130 or more, a room temperature MIT 2 of 14 or more, and a high-temperature MIT 2 of 25 or more,

wherein the room temperature MIT 1 refers to an MIT number when a bending radius (R) is 0.38 mm at room temperature,

the high-temperature MIT 1 refers to an MIT number when a bending radius (R) is 0.38 mm after heat treatment at 190 °C for one hour,

the room temperature MIT 2 refers to an MIT number when a bending radius (R) is 0.1 mm at room temperature, and

the high-temperature MIT 2 refers to an MIT number when a bending radius (R) is 0.1 mm after heat treatment at 190 °C for one hour.

22. The copper foil of claim 21, wherein the copper foil has a room temperature tensile strength of 50 kgf/mm$^2$ or more.

23. The copper foil of claim 21, wherein the copper foil has a high-temperature tensile strength of 40 kgf/mm$^2$ or more.

24. The copper foil of claim 21, wherein the copper foil has a high-temperature grain size in a range of 1.4 $\mu$m to 3.1 $\mu$m.

25. The copper foil of claim 21, further comprising a protective layer formed on the copper film.

26. The copper foil of claim 25, wherein the protective layer includes at least one of a chromium compound, a silane compound, and a nitrogen compound.

# FIG. 1

110

~112
~111

# FIG. 2

110

~112
~111
~112

# FIG. 3

100

~120
112 ⎫
111 ⎬ 110

# FIG. 4

100

~120
112 ⎫
111 ⎬ 110
112
~120

FIG. 5

341  342          350  360          372  371
    340                                  370

# FIG. 6

## INTERNATIONAL SEARCH REPORT

| | International application No. |
|---|---|
| | **PCT/KR2023/018614** |

| A. | CLASSIFICATION OF SUBJECT MATTER |
|---|---|

**C25D 1/04**(2006.01)i; **C25D 3/38**(2006.01)i; **C25D 17/12**(2006.01)i; **C23C 28/00**(2006.01)i; **C23F 11/18**(2006.01)i; **H01M 4/66**(2006.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

C25D 1/04(2006.01); C23G 5/024(2006.01); C25D 3/38(2006.01); C25D 5/10(2006.01); H01L 23/48(2006.01); H01M 10/052(2010.01); H01M 10/0525(2010.01); H01M 4/13(2010.01); H01M 4/139(2010.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동박(copper foil), 뚫림 강도(puncture strength), 전해액(electrolyte), 은(Ag), 세륨 (Ce), 납(Pb), 물 접촉각(water contact angle), 표면 저항률(surface resistivity), 색차(color difference), 굽힘 피로(bending fatigue)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2014-0003511 A (FURUKAWA ELECTRIC CO., LTD.) 09 January 2014 (2014-01-09) See paragraphs [0248]-[0251] and claims 1 and 16. | 1-26 |
| A | KR 10-2019-0065931 A (CHANG CHUN PETROCHEMICAL CO., LTD.) 12 June 2019 (2019-06-12) See paragraphs [0012] and [0016]-[0019], claim 1, table 4 and figure 1. | 1-26 |
| A | KR 10-2018-0021987 A (LS MTRON LTD.) 06 March 2018 (2018-03-06) See paragraph [0081] and claims 12, 15 and 16. | 1-26 |
| A | KR 10-1734840 B1 (ILJIN MATERIALS CO., LTD.) 15 May 2017 (2017-05-15) See paragraphs [0043] and [0076]-[0078], claims 1, 2 and 8 and table 3. | 1-26 |
| A | JP 2000-313980 A (NIPPON MINING & METALS CO., LTD.) 14 November 2000 (2000-11-14) See paragraph [0005], claim 1 and table 1. | 1-26 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 March 2024** | **12 March 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/018614** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-0738164 B1 (MITSUI MINING & SMELTING CO., LTD.) 10 July 2007 (2007-07-10)<br>    See paragraph [0020] and claims 1 and 2. | 1-26 |
| A | KR 10-1999-0076497 A (HITACHI CABLE, LTD.) 15 October 1999 (1999-10-15)<br>    See claims 7 and 14. | 1-26 |
| A | US 2020-0106102 A1 (CHANG CHUN PETROCHEMICAL CO., LTD.) 02 April 2020 (2020-04-02)<br>    See paragraphs [0027]-[0030], claims 1 and 2 and figures 1 and 2. | 1-26 |

Form PCT/ISA/210 (second sheet) (July 2022)

## INTERNATIONAL SEARCH REPORT

| International application No. |
| --- |
| **PCT/KR2023/018614** |

**Box No. III**  **Observations where unity of invention is lacking (Continuation of item 3 of first sheet)**

This International Searching Authority found multiple inventions in this international application, as follows:

Invention of group 1: claims 1-7 pertain to a copper coil having a copper film, which comprises 99.9 wt% or more of copper, and a protection layer, and having a room-temperature puncture strength and high-temperature puncture strength of a specific range,

Invention of group 2: claim 8 pertain to a copper foil manufacturing method,

Invention of group 3: claims 9-13 pertain to a copper foil having a copper film, which comprises 99.9 wt% or more of copper, and a protection layer, and having a room-temperature water contact angle and a room-temperature surface resistivity of a specific range,

The invention of group 4: claims 14-20 pertain to a copper foil having a copper film, which comprises99.9 wt% or more of copper, and a protection layer, and having a color difference coefficient in a specific range,

The invention of group 5: claims 21-26 pertain to a copper foil having a copper film, which comprises 99.9 wt% or more of copper, and having a room-temperature MIT 1, a high-temperature MIT 1, a room-temperature MIT 2 and a high-temperature MIT 2 of a specific range.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**
[ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (July 2022)

## INTERNATIONAL SEARCH REPORT
### Information on patent family members

International application No.

**PCT/KR2023/018614**

| Patent document cited in search report | | | Publication date (day/month/year) | Patent family member(s) | | | Publication date (day/month/year) |
|---|---|---|---|---|---|---|---|
| KR | 10-2014-0003511 | A | 09 January 2014 | CN | 103314474 | A | 18 September 2013 |
| | | | | CN | 103314474 | B | 26 October 2016 |
| | | | | EP | 2654111 | A1 | 23 October 2013 |
| | | | | EP | 2654111 | A4 | 13 August 2014 |
| | | | | EP | 2654111 | B1 | 18 April 2018 |
| | | | | JP | 2012-151106 | A | 09 August 2012 |
| | | | | JP | 5276158 | B2 | 28 August 2013 |
| | | | | KR | 10-1823187 | B1 | 29 January 2018 |
| | | | | TW | 201301641 | A | 01 January 2013 |
| | | | | TW | I466367 | B | 21 December 2014 |
| | | | | US | 2014-0017564 | A1 | 16 January 2014 |
| | | | | US | 9603245 | B2 | 21 March 2017 |
| | | | | WO | 2012-091060 | A1 | 05 July 2012 |
| KR | 10-2019-0065931 | A | 12 June 2019 | CN | 109868490 | A | 11 June 2019 |
| | | | | CN | 109868490 | B | 04 January 2022 |
| | | | | EP | 3492633 | A1 | 05 June 2019 |
| | | | | EP | 3492633 | B1 | 24 November 2021 |
| | | | | ES | 2902023 | T3 | 24 March 2022 |
| | | | | HU | E057603 | T2 | 28 May 2022 |
| | | | | JP | 2019-099911 | A | 24 June 2019 |
| | | | | JP | 7316772 | B2 | 28 July 2023 |
| | | | | KR | 10-2592302 | B1 | 20 October 2023 |
| | | | | PL | 3492633 | T3 | 14 February 2022 |
| | | | | TW | 201925537 | A | 01 July 2019 |
| | | | | TW | I775920 | B | 01 September 2022 |
| | | | | US | 10205170 | B1 | 12 February 2019 |
| | | | | US | 2019-0173091 | A1 | 06 June 2019 |
| KR | 10-2018-0021987 | A | 06 March 2018 | CN | 107768675 | A | 06 March 2018 |
| | | | | CN | 107768675 | B | 15 October 2021 |
| | | | | EP | 3288101 | A1 | 28 February 2018 |
| | | | | EP | 3288101 | B1 | 28 October 2020 |
| | | | | HU | E052694 | T2 | 28 May 2021 |
| | | | | JP | 2018-032624 | A | 01 March 2018 |
| | | | | JP | 6680727 | B2 | 15 April 2020 |
| | | | | KR | 10-2318603 | B1 | 27 October 2021 |
| | | | | PL | 3288101 | T3 | 20 September 2021 |
| | | | | TW | 201807875 | A | 01 March 2018 |
| | | | | TW | I624986 | B | 21 May 2018 |
| | | | | US | 10547081 | B2 | 28 January 2020 |
| | | | | US | 2018-0062199 | A1 | 01 March 2018 |
| KR | 10-1734840 | B1 | 15 May 2017 | CN | 109923714 | A | 21 June 2019 |
| | | | | CN | 109923714 | B | 14 June 2022 |
| | | | | EP | 3540836 | A1 | 18 September 2019 |
| | | | | JP | 2020-502728 | A | 23 January 2020 |
| | | | | JP | 2022-050471 | A | 30 March 2022 |
| | | | | JP | 7061120 | B2 | 27 April 2022 |
| | | | | TW | 201818594 | A | 16 May 2018 |
| | | | | TW | I614933 | B | 11 February 2018 |
| | | | | US | 11142838 | B2 | 12 October 2021 |
| | | | | US | 11629422 | B2 | 18 April 2023 |

Form PCT/ISA/210 (patent family annex) (July 2022)

### INTERNATIONAL SEARCH REPORT
#### Information on patent family members

International application No.

**PCT/KR2023/018614**

| Patent document cited in search report | | | Publication date (day/month/year) | Patent family member(s) | | | Publication date (day/month/year) |
|---|---|---|---|---|---|---|---|
| | | | | US | 2019-0316266 | A1 | 17 October 2019 |
| | | | | US | 2021-0230761 | A1 | 29 July 2021 |
| | | | | WO | 2018-088645 | A1 | 17 May 2018 |
| JP | 2000-313980 | A | 14 November 2000 | JP | 3607832 | B2 | 05 January 2005 |
| KR | 10-0738164 | B1 | 10 July 2007 | CN | 100567584 | C | 09 December 2009 |
| | | | | CN | 1777705 | A | 24 May 2006 |
| | | | | JP | 2005-187913 | A | 14 July 2005 |
| | | | | JP | 4354271 | B2 | 28 October 2009 |
| | | | | TW | 200526111 | A | 01 August 2005 |
| | | | | TW | I301049 | B | 11 September 2008 |
| | | | | WO | 2005-064044 | A1 | 14 July 2005 |
| KR | 10-1999-0076497 | A | 15 October 1999 | DE | 19841764 | A1 | 23 September 1999 |
| | | | | JP | 11-297753 | A | 29 October 1999 |
| | | | | JP | 11-330149 | A | 30 November 1999 |
| | | | | KR | 10-0780828 | B1 | 09 May 2008 |
| | | | | SG | 111958 | A1 | 29 June 2005 |
| | | | | SG | 77652 | A1 | 16 January 2001 |
| | | | | TW | 423123 | B | 21 February 2001 |
| | | | | US | 2001-0002066 | A1 | 31 May 2001 |
| | | | | US | 6297142 | B1 | 02 October 2001 |
| | | | | US | 6426548 | B1 | 30 July 2002 |
| | | | | US | 6433409 | B2 | 13 August 2002 |
| US | 2020-0106102 | A1 | 02 April 2020 | CN | 110970623 | A | 07 April 2020 |
| | | | | CN | 110970623 | B | 07 May 2021 |
| | | | | JP | 2020-057581 | A | 09 April 2020 |
| | | | | JP | 6910381 | B2 | 28 July 2021 |
| | | | | KR | 10-2033288 | B1 | 16 October 2019 |
| | | | | TW | 202015276 | A | 16 April 2020 |
| | | | | TW | I660541 | B | 21 May 2019 |
| | | | | US | 10665865 | B2 | 26 May 2020 |

Form PCT/ISA/210 (patent family annex) (July 2022)